(19)

Europäisches
Patentamt
European
Patent Office
Office européen
des brevets

(11) **EP 3 441 372 A1**

(12) **EUROPEAN PATENT APPLICATION**
published in accordance with Art. 153(4) EPC

(43) Date of publication:
**13.02.2019 Bulletin 2019/07**

(21) Application number: **17778931.0**

(22) Date of filing: **15.03.2017**

(51) Int Cl.:
*C03C 3/095* (2006.01)          *C03C 3/062* (2006.01)
*C03C 3/068* (2006.01)          *C03C 3/097* (2006.01)
*G02B 1/00* (2006.01)

(86) International application number:
**PCT/JP2017/010321**

(87) International publication number:
**WO 2017/175552 (12.10.2017 Gazette 2017/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **04.04.2016 JP 2016075377**
**04.04.2016 JP 2016075378**

(71) Applicant: **Ohara Inc.**
**Chuo-ku**
**Sagamihara-shi**
**Kanagawa 252-5286 (JP)**

(72) Inventors:
• **NOJIMA Hiroto**
**Sagamihara-Shi**
**Kanagawa 252-5286 (JP)**
• **NAGAOKA Atsushi**
**Sagamihara-Shi**
**Kanagawa 252-5286 (JP)**
• **OGURI Fumihiro**
**Sagamihara-Shi**
**Kanagawa 252-5286 (JP)**

(74) Representative: **Grünecker Patent- und
Rechtsanwälte
PartG mbB
Leopoldstraße 4
80802 München (DE)**

(54) **OPTICAL GLASS, PREFORM MATERIAL AND OPTICAL ELEMENT**

(57)     Provided is glass having a predetermined index of refraction ($n_d$) and Abbe number ($v_d$), high chemical resistance (acid resistance) and a small degree of abrasion. The optical glass contains, in wt%, 10.0-40.0% of a $SiO_2$ component, 15.0-50.0% of a $La_2O_3$ component and 5.0% to less than 25.0% of a $TiO_2$ component, has a mass ratio $B_2O_3/SiO_2$ less than or equal to 1.00, an index of refraction ($n_d$) of 1.78-1.95 and an Abbe number ($v_d$) of 25-45, and chemical resistance (acid resistance) via a powder method that is class 1-3. The optical glass has a degree of abrasion of less than or equal to 200.

**EP 3 441 372 A1**

**Description**

TECHNICAL FIELD

The present invention relates to an optical glass, a preform material, and an optical element.

BACKGROUND ART

In recent years, shooting devices such as a digital camera and a video camera, and other devices using an optical system such as a monitoring camera and an in-vehicle camera are increasingly used outdoors in a constant manner. Lenses used in the optical system for use in such applications are required to have sufficient durability to withstand weather and chemicals.

Particularly among optical glass used to form an optical element, there is a significantly increasing demand for high-refractive-index and low-dispersion glass that has a refractive index ($n_d$) of not less than 1.60 but not more than 1.95 and an Abbe number ($v_d$) of not less than 25 but not more than 62 and that enables reduction in weight and size of the whole of an optical system. Glass compositions as typified by Patent Literatures 1 and 2 are known for such high-refractive-index and low-dispersion glass.

CITATION LIST

PATENT LITERATURE

Patent Literature 1: JP 2002-173334 A
Patent Literature 2: JP 2009-269771 A

SUMMARY OF INVENTION

TECHNICAL PROBLEMS

The optical glass according to the invention is desired to have chemical durability of Class 1 to Class 3 in terms of chemical durability (acid resistance) of glass as measured by the powder method according to JOGIS 06-1999, and a degree of abrasion of not more than 200 as measured by the "Measuring Method for Degree of Abrasion of Optical Glass" according to JOGIS 10-1994. In this way, glass can be obtained in which tarnish and interference film that are generally called "dimming" and "staining," respectively, and that may be caused on a lens surface due to water vapor, carbonic acid gas, rain and the like in the air do not take place, the glass not being scratched even when sand, stone, dust or the like rubs on or collide with the lens surface.

Optical glass for use in an optical element is required to be stably obtained when formed as glass. In cases where the stability of glass against devitrification (resistance to devitrification) is reduced to generate crystals inside the glass, glass suitable for use as an optical element can no longer be obtained.

Optical glass containing an $La_2O_3$ component as its main component contains a large amount of a $B_2O_3$ component. In other words, there exist a large amount of optical glass having a so-called $B_2O_3$-$La_2O_3$ compositional system. Incorporation of not less than 10.0% of the $B_2O_3$ component together with the $La_2O_3$ component leads to introduction of large amounts of rare-earth components to contribute to stability and a higher refractive index during formation of glass.

However, if the $B_2O_3$ component is contained in a large amount, durability such as chemical durability (acid durability) and degree of abrasion will be disadvantageously reduced.

Each of glass compositions described in Patent Literatures 1 and 2 relates to optical glass having a so-called $B_2O_3$-$La_2O_3$ compositional system and has low chemical durability (acid resistance) and a high degree of abrasion, and is therefore not suitable for cases in which use under exposure to an external environment is presupposed.

Further, the $SiO_2$ component for improving the durability is not sufficiently contained in the glass compositions described in Patent Literatures 1 and 2, and the glass compositions suffer from low chemical durability (acid resistance) and a high degree of abrasion.

The present invention has been made in view of the problems described above, and an object of the present invention is to obtain glass having high chemical durability (acid resistance) and a low degree of abrasion while the refractive index ($n_d$) is not less than 1.60 but not more than 1.95 and the Abbe number ($v_d$) is within a desired range of not less than 25 but not more than 62.

SOLUTION TO PROBLEMS

In order to solve the problems described above, the inventors of the present invention have made intensive experiments and studies and as a result found that glass containing an $SiO_2$ component and an $La_2O_3$ component whose refractive index ($n_d$) and Abbe number ($v_d$) are within desired ranges, particularly glass having a refractive index ($n_d$) of not less than 1.78 but not more than 1.95 and an Abbe number ($v_d$) of not less than 25 but not more than 45 (optical glass according to a first aspect), and more particularly glass having a refractive index ($n_d$) of not less than 1.60 but not more than 1.85, and an Abbe number ($v_d$) of not less than 33 but not more than 62 (optical glass according to a second aspect) enable an increase in devitrification resistance while reducing the amount of a component, in particular a $B_2O_3$ component that may reduce the chemical durability (acid resistance). The present invention has been thus completed.
More specifically, the present invention provides the following:

(1) An optical glass comprising, by mass%:

10.0% to 40.0% of an $SiO_2$ component;
15.0% to 50.0% of an $La_2O_3$ component; and
5.0% to less than 25.0% of a $TiO_2$ component,
wherein the optical glass has
a $B_2O_3/SiO_2$ mass ratio of not more than 1.00,
a refractive index ($n_d$) of 1.78 to 1.95, and an Abbe number ($v_d$) of 25 to 45, and
chemical durability (acid resistance) of Class 1 to Class 3 when measured by a powder method.

(2) The optical glass according to (1) comprising, by mass%:

0 to 30.0% of a ZnO component;
0 to 20.0% of a $ZrO_2$ component;
0 to 20.0% of an $Al_2O_3$ component;
0 to 25.0% of a $Y_2O_3$ component; and
0 to 20.0% of a $B_2O_3$ component.

(3) The optical glass according to (1) or (2), wherein a total mass of $B_2O_3 + Nb_2O_5$ is less than 20.0%, and a total mass of $ZrO_2 + Nb_2O_5 + WO_3 + ZnO$ is less than 25.0%.
(4) The optical glass according to any one of (1) to (3), wherein a total mass of $TiO_2 + ZrO_2$ is less than 35.0%.
(5) An optical glass comprising, by mass%:

10.0% to 50.0% of an $SiO_2$ component;
15.0% to 60.0% of an $La_2O_3$ component; and
0 to less than 15.0% of a $TiO_2$ component,
wherein the optical glass has
a $B_2O_3/SiO_2$ mass ratio of not more than 1.00,
a refractive index ($n_d$) of 1.60 to 1.85, and an Abbe number ($v_d$) of 33 to 62, and
chemical durability (acid resistance) of Class 1 to Class 3 when measured by a powder method.

(6) The optical glass according to (5) comprising, by mass%:

0 to 35.0% of a ZnO component;
0 to 20.0% of a $ZrO_2$ component;
0 to 20.0% of an $Al_2O_3$ component; and
0 to 20.0% of a $B_2O_3$ component.

(7) The optical glass according to (5) or (6), wherein a total mass of $B_2O_3 + Nb_2O_5$ is less than 20.0%.
(8) The optical glass according to any one of (1) to (7), wherein a total mass of an $Ln_2O_3$ component (where Ln is one or more selected from the group consisting of La, Gd, Y, Yb, and Lu) is not less than 15.0% but not more than 65.0%, a total mass of an RO component (where R is one or more selected from the group consisting of Mg, Ca, Sr, and Ba) is not more than 25.0%, and a total mass of an $Rn_2O$ component (where Rn is one or more selected from the group consisting of Li, Na, and K) is not more than 10.0%.
(9) The optical glass according to any one of (1) to (8), having an abrasion degree of not more than 200.
(10) A preform material comprising the optical glass according to any one of (1) to (9).

(11) An optical element comprising the optical glass according to any one of (1) to (10).
(12) An optical instrument comprising the optical element according to (11).

ADVANTAGEOUS EFFECTS OF THE INVENTION

According to the invention, there can be obtained glass in which the chemical durability (acid resistance) according to the powder method is high and the degree of abrasion assumes a small value while the refractive index ($n_d$) and the Abbe number ($v_d$) are within desired ranges.

DESCRIPTION OF EMBODIMENTS

(Optical Glass According to First Aspect)

An optical glass according to the first aspect of the invention comprises, by mass%, not less than 10.0% but not more than 40.0% of an $SiO_2$ component; not less than 15.0% but not more than 50.0% of an $La_2O_3$ component; and not less than 5.0% but less than 25% of a $TiO_2$ component, wherein the optical glass has a mass ratio ($B_2O_3/SiO_2$) of not more than 1.0, a refractive index ($n_d$) of not less than 1.78 but not more than 1.95, and an Abbe number ($v_d$) of not less than 25 but not more than 45. In optical glass containing the $SiO_2$ component and the $La_2O_3$ component as its main components, glass showing high acid resistance while also having a refractive index ($n_d$) of not less than 1.78 and an Abbe number ($v_d$) of not less than 25 but not more than 45 is easily obtained.
In addition, the optical glass according to the first aspect of the invention can be suitably used in applications in which visible light is transmitted by high visible light transmittance.
An embodiment of the optical glass according to the present invention is described below in detail. The present invention is by no means limited to the embodiment described below but can be embodied within the scope of the purpose of the invention by appropriately adding modifications. A description may be omitted as appropriate in portions where descriptions overlap. This does not, however, limit the scope of the invention.

[Glass Components]

The composition range of each component making up the optical glass of the invention is described below. Unless otherwise specified, the component contents in the specification are all shown by mass% with respect to the total mass number of the composition in terms of oxides. The "composition in terms of oxides" as used herein refers to a composition indicating each of components contained in glass assuming that oxides, complex salts, metal fluorides and the like used as materials of the components making up the glass of the invention are all decomposed into oxides during melting, the components being indicated with respect to the total mass number of the produced oxides which is taken as 100 mass%.

<Essential Components and Optional Components>

In the optical glass of the invention having high durability, the $SiO_2$ component is an essential component as an oxide for glass formation. In particular, adjustment of the $SiO_2$ component content to 10.0% or more leads to higher resistance of glass to acids, less degree of abrasion, and higher glass viscosity. Therefore, the lower limit of the $SiO_2$ component content is preferably adjusted to 10.0%, more preferably 15.0%, even more preferably 20.0%, and still more preferably 25.0%.
On the other hand, adjustment of the $SiO_2$ component content to 40.0% or less leads to easy obtainment of a larger refractive index and improved deterioration of the devitrification resistance. Therefore, the $SiO_2$ component content is preferably adjusted to not more than 40.0%, more preferably less than 37.0%, even more preferably less than 35.0%, and still more preferably less than 33.0%.
Materials such as $SiO_2$, $K_2SiF_6$, $Na_2SiF_s$, and $ZrSiO_4$ can be used for the $SiO_2$ component.
The $La_2O_3$ component is an essential component to increase the refractive index and Abbe number of glass. Therefore, the $La_2O_3$ component content is preferably adjusted to not less than 15.0%, more preferably more than 16.0%, even more preferably more than 18.0%, and still more preferably more than 20.0%.
On the other hand, adjustment of the $La_2O_3$ component content to 50.0% or less leads to enhanced glass stability, whereby devitrification can be minimized while preventing the Abbe number from increasing more than necessary. The melting properties of glass materials can also be enhanced. Therefore, the $La_2O_3$ component content is preferably adjusted to not more than 50.0%, more preferably less than 45.0%, and even more preferably less than 40.0%.
Materials such as $La_2O_3$ and $La(NO_3)_3 \cdot XH_2O$ (X is an arbitrary integer) can be used for the $La_2O_3$ component.
When contained in an amount of not less than 5.0%, the $TiO_2$ component is an optional component that may increase the refractive index of glass and improve the stability through reduction of the liquidus temperature of glass. Therefore, the $TiO_2$ component content may be preferably adjusted to not less than 5.0%, more preferably more than 6.0%, even more preferably more than 7.0%, still more preferably more than 8.0%, and even still more preferably more than 9.0%.

On the other hand, through adjustment of the $TiO_2$ component content to less than 25.0%, devitrification due to the excessively contained $TiO_2$ component can be minimized while less reducing the visible light transmittance of glass (particularly at a wavelength of not more than 500 nm). This also minimizes reduction of the Abbe number. Therefore, the $TiO_2$ component content is preferably adjusted to less than 25.0%, more preferably less than 24.0%, even more preferably less than 21.0%, still more preferably less than 19.0%, and most preferably not more than 15.0%.

Materials such as $TiO_2$ can be used for the $TiO_2$ component.

The ratio (mass ratio) of the $B_2O_3$ component content to the $SiO_2$ component content is preferably not more than 1.0.

Glass that has improved acid resistance and may withstand prolonged use can be easily obtained by particularly adjusting the mass ratio to 1.0 or less. Therefore, the $B_2O_3/SiO_2$ mass ratio is preferably adjusted to not more than 1.0, more preferably not more than 0.98, even more preferably not more than 0.90, still more preferably not more than 0.80, and even still more preferably not more than 0.70.

When contained in an amount exceeding 0%, the ZnO component is an optional component that may enhance material melting properties, promote degassing of melted glass, and improve stability of glass. The ZnO component is also a component that can reduce coloration of glass owing to the melting time that can be shortened or other reasons. The ZnO component is also a component that can reduce the glass transition point and improve the chemical durability (acid resistance). Therefore, the ZnO component content may be preferably adjusted to more than 0%, more preferably more than 1.0%, even more preferably more than 2.5%, still more preferably more than 4.5%, even still more preferably more than 6.5%, and still even more preferably more than 8.5%.

On the other hand, through adjustment of the ZnO component content to 30.0% or less, the refractive index of glass can be less reduced while also minimizing devitrification due to excessively lowered viscosity. Therefore, the ZnO component content is preferably adjusted to not more than 30.0%, more preferably less than 28.0%, and even more preferably less than 25.0%.

Materials such as ZnO and $ZnF_2$ can be used for the ZnO component.

When contained in an amount exceeding 0%, the $ZrO_2$ component is an optional component that can increase the refractive index and Abbe number of glass and enhance the devitrification resistance. Therefore, the $ZrO_2$ component content may be preferably adjusted to more than 0%, more preferably more than 1.0%, even more preferably more than 3.0%, still more preferably more than 5.0%, and even still more preferably more than 7.0%.

On the other hand, through adjustment of the $ZrO_2$ component content to 20.0% or less, devitrification due to the excessively contained $ZrO_2$ component can be minimized. Therefore, the $ZrO_2$ component content is preferably adjusted to not more than 20.0%, more preferably less than 18.0%, even more preferably less than 16.0%, and still more preferably less than 14.0%.

Materials such as $ZrO_2$ and $ZrF_4$ can be used for the $ZrO_2$ component.

When contained in an amount exceeding 0%, the $Al_2O_3$ component is an optional component that can improve the chemical durability (acid resistance) of glass and improve the devitrification resistance of melted glass. Therefore, the $Al_2O_3$ component content may be preferably adjusted to more than 0%, more preferably more than 1.0%, even more preferably more than 2.5%, still more preferably more than 5.0%, and even still more preferably more than 7.5%.

On the other hand, through adjustment of the $Al_2O_3$ component content to 20.0% or less, the liquidus temperature of glass can be reduced to enhance the devitrification resistance. Therefore, the $Al_2O_3$ component content is preferably adjusted to not more than 20.0%, more preferably less than 18.0%, even more preferably less than 16.5%, and still more preferably less than 15.0%.

Materials such as $Al_2O_3$, $Al(OH)_3$, and $AlF_3$ can be used for the $Al_2O_3$ component.

When contained in an amount exceeding 0%, the $Y_2O_3$ component is an optional component that may reduce material costs of glass while keeping a high refractive index and a high Abbe number and can reduce the specific gravity of glass more than using other rare-earth components.

On the other hand, through adjustment of the $Y_2O_3$ component content to 25.0% or less, the stability of glass can be enhanced while less reducing the refractive index of glass. Deterioration of the melting properties of glass materials can also be improved. Therefore, the $Y_2O_3$ component content is preferably adjusted to not more than 25.0%, more preferably less than 23.0%, even more preferably less than 20.0%, and most preferably not more than 18.0%.

Materials such as $Y_2O_3$ and $YF_3$ can be used for the $Y_2O_3$ component.

When contained in an amount exceeding 0%, the $B_2O_3$ component is an optional component as a glass-forming oxide that may reduce the liquidus temperature while enhancing the devitrification resistance.

On the other hand, through adjustment of the $B_2O_3$ component content to 20.0% or less, a larger refractive index can be easily obtained while also improving deterioration of the chemical durability (acid resistance) and suppressing an increase in degree of abrasion. Therefore, the $B_2O_3$ component content is preferably adjusted to not more than 20.0%, more preferably less than 16.0%, even more preferably less than 14%, still more preferably less than 13.0%, even still more preferably less than 12.0%, and still even more preferably less than 10.0%.

Materials such as $H_3BO_3$, $Na_2B_4O_7$, $Na_2B_4O_7 \cdot 10H_2O$, and $BPO_4$ can be used for the $B_2O_3$ component.

When contained in an amount exceeding 0%, the $Nb_2O_5$ component is an optional component that may increase the refractive index of glass and enhance the devitrification resistance through reduction of the liquidus temperature of glass. Therefore, the $Nb_2O_5$ component content may be preferably adjusted to more than 0%, more preferably more than 1.0%, even more preferably more than 3.0%, still more preferably more than 4.5%, and even still more preferably more than 6.5%.

On the other hand, through adjustment of the $Nb_2O_5$ component content to less than 15.0%, devitrification due to the excessively contained $Nb_2O_5$ component can be minimized while less reducing the visible light transmittance of glass (particularly at a wavelength of not more than 500 nm). This also minimizes reduction of the Abbe number. Therefore, the $Nb_2O_5$ component content is preferably adjusted to less than 15.0%, more preferably less than 13.0%, even more preferably less than 10.0%, and still more preferably less than 7.0%.

Materials such as $Nb_2O_5$ can be used for the $Nb_2O_5$ component.

When contained in an amount exceeding 0%, the $WO_3$ component is an optional component that allows glass to have a higher refractive index, a lower glass transition point and enhanced devitrification resistance while reducing coloration of glass due to other high refractive index components.

On the other hand, through adjustment of the $WO_3$ component content to less than 10.0%, material costs of glass can be reduced. Further, coloration of glass due to the $WO_3$ component can be reduced to increase the visible light transmittance. Therefore, the $WO_3$ component content is preferably adjusted to less than 10.0%, more preferably less than 6.0%, even more preferably less than 4.5%, still more preferably less than 3.0%, even still more preferably less than 1.0%, still even more preferably less than 0.5%, and yet even more preferably less than 0.1%.

Materials such as $WO_3$ can be used for the $WO_3$ component.

When contained in an amount exceeding 0%, the $Gd_2O_3$ component is an optional component that may increase the refractive index of glass.

However, when the $Gd_2O_3$ component is contained in a large amount, production cost is increased due to its high material cost. An increase in Abbe number of glass can be suppressed by adjusting the $Gd_2O_3$ component content to 25.0% or less. Therefore, the $Gd_2O_3$ component content is preferably adjusted to not more than 25.0%, more preferably less than 23.0%, and even more preferably less than 20.0%.

Materials such as $Gd_2O_3$ and $GdF_3$ can be used for the $Gd_2O_3$ component.

When contained in an amount exceeding 0%, the $Yb_2O_3$ component is an optional component that may increase the refractive index of glass.

However, when the $Yb_2O_3$ component is contained in a large amount, production cost is increased due to its high material cost. An increase in Abbe number of glass can be suppressed by adjusting the $Yb_2O_3$ component content to less than 5.0%. Therefore, the $Yb_2O_3$ component content is preferably adjusted to less than 5.0%, more preferably less than 3.0%, even more preferably less than 2.0%, still more preferably less than 0.5%, and even still more preferably less than 0.1%.

Materials such as $Yb_2O_3$ can be used for the $Yb_2O_3$ component.

When contained in an amount exceeding 0%, the $Ta_2O_5$ component is an optional component that may increase the refractive index of glass and enhance the devitrification resistance.

However, when the $Ta_2O_5$ component is contained in a large amount, production cost is increased due to its high material cost. Further, adjustment of the $Ta_2O_5$ component content to less than 5.0% leads to a lower melting temperature of the material to realize reduction of energy required for melting the material, and therefore costs involved in optical glass production can also be reduced. Therefore, the $Ta_2O_5$ component content is preferably adjusted to less than 5.0%, more preferably less than 3.0%, even more preferably less than 1.0%, still more preferably less than 0.5%, and even still more preferably less than 0.1%. It is most preferable not to contain the $Ta_2O_5$ component from the viewpoint of reducing the material cost.

Materials such as $Ta_2O_5$ can be used for the $Ta_2O_5$ component.

When contained in an amount exceeding 0%, the MgO component is an optional component that can adjust the refractive index, melting properties, and devitrification resistance of glass.

Through adjustment of the MgO component content to 10.0% or less, the refractive index can be less reduced while also minimizing devitrification due to these components excessively contained. Therefore, the MgO component content is preferably adjusted to not more than 10.0%, more preferably less than 5.0%, even more preferably less than 3.0%, and still more preferably less than 1.0%.

Materials such as $MgCO_3$ and $MgF_2$ can be used for the MgO component.

When contained in an amount exceeding 0%, the CaO component is an optional component that can adjust the refractive index, melting properties, and devitrification resistance of glass.

Also through adjustment of the CaO component content to 35.0% or less, a desired refractive index can be easily obtained while minimizing devitrification due to these components excessively contained. Therefore, the CaO component content is preferably adjusted to not more than 35.0%, more preferably less than 30.0%, even more preferably less than 25.0%, still more preferably less than 22.0%, and even still more preferably less than 20.0%.

Materials such as $CaCO_3$ and $CaF_2$ can be used for the CaO component.

When contained in an amount exceeding 0%, the SrO component is an optional component that can adjust the refractive index, melting properties, and devitrification resistance of glass.

Also through adjustment of the SrO component content to 35.0% or less, a desired refractive index can be easily obtained while minimizing devitrification due to these components excessively contained. Therefore, the SrO component content is preferably adjusted to not more than 35.0%, more preferably less than 30.0%, even more preferably less than 25.0%, still more preferably less than 22.0%, and even still more preferably less than 20.0%.

Materials such as $Sr(NO_3)_2$ and $SrF_2$ can be used for the SrO component.

When contained in an amount exceeding 0%, the BaO component is an optional component that can adjust the refractive index, melting properties, and devitrification resistance of glass.

Also through adjustment of the BaO component content to 35.0% or less, a desired refractive index can be easily obtained while minimizing devitrification due to these components excessively contained. Therefore, the BaO component content is preferably adjusted to not more than 35.0%, more preferably less than 30.0%, even more preferably less than 29.0%, still more preferably less than 25.0%, even still more preferably less than 22.0%, and still even more preferably less than 20.0%.

Materials such as $BaCO_3$, $Ba(NO_3)_2$, and $BaF_2$ can be used for the BaO component.

When contained in an amount exceeding 0%, the $Li_2O$ component is an optional component that can improve the melting properties of glass and reduce the glass transition point.

On the other hand, adjustment of the $Li_2O$ component content to 10.0% or less can lead to improved deterioration of the chemical durability (acid resistance), a less easily reduced refractive index of glass, and minimized devitrification of glass. Further, reduction of the $Li_2O$ component content leads to enhanced viscosity of glass, and striae of glass can be therefore reduced. Accordingly, the $Li_2O$ component content is preferably adjusted to not more than 10.0%, more preferably less than 5.0%, even more preferably less than 3.0%, still more preferably less than 1.0%, even still more preferably less than 0.5%, and still even more preferably less than 0.1%.

Materials such as $Li_2CO_3$, $LiNO_3$, and $Li_2CO_3$ can be used for the $Li_2O$ component.

When contained in an amount exceeding 0%, the $Na_2O$ component is an optional component that can improve the melting properties of glass and reduce the glass transition point.

On the other hand, adjustment of the $Na_2O$ component content to 10.0% or less can lead to a less easily reduced refractive index of glass, and minimized devitrification of glass. Therefore, the $Na_2O$ component content is preferably adjusted to not more than 10.0%, more preferably less than 6.0%, even more preferably less than 3.0%, still more preferably less than 1.0%, even still more preferably less than 0.5%, and still even more preferably less than 0.1%.

Materials such as $Na_2CO_3$, $NaNO_3$, $NaF$, and $Na_2SiF_6$ can be used for the $Na_2O$ component.

When contained in an amount exceeding 0%, the $K_2O$ component is an optional component that can improve the melting properties of glass and reduce the glass transition point.

On the other hand, adjustment of the $K_2O$ component content to 10.0% or less can lead to a less easily reduced refractive index of glass, a suppressed increase in degree of abrasion, and minimized devitrification of glass. Therefore, the $K_2O$ component content is preferably adjusted to not more than 10.0%, more preferably less than 5.0%, even more preferably less than 3.0%, still more preferably less than 1.0%, even still more preferably less than 0.5%, and still even more preferably less than 0.1%.

Materials such as $K_2CO_3$, $KNO_3$, $KF$, $KHF_2$, and $K_2SiF_6$ can be used for the $K_2O$ component.

When contained in an amount exceeding 0%, the $P_2O_5$ component is an optional component that may reduce the liquidus temperature of glass to enhance the devitrification resistance.

On the other hand, adjustment of the $P_2O_5$ component content to 10.0% or less can lead to improved deterioration of the chemical durability (acid resistance) of glass and a suppressed increase in degree of abrasion. Therefore, the $P_2O_5$ component content is preferably adjusted to not more than 10.0%, more preferably less than 5.0%, and even more preferably less than 3.0%.

Materials such as $Al(PO_3)_3$, $Ca(PO_3)_2$, $Ba(PO_3)_2$, $BPO_4$, and $H_3PO_4$ can be used for the $P_2O_5$ component.

When contained in an amount exceeding 0%, the $GeO_2$ component is an optional component that can increase the refractive index of glass and improve its devitrification resistance.

However, when $GeO_2$ is contained in a large amount, production cost is increased due to its high material cost. Therefore, the $GeO_2$ component content is preferably adjusted to not more than 10.0%, more preferably less than 5.0%, even more preferably less than 3.0%, still more preferably less than 1.0%, and even still more preferably less than 0.1%. The $GeO_2$ component may not be contained from the viewpoint of reducing the material cost.

Materials such as $GeO_2$ can be used for the $GeO_2$ component.

When contained in an amount exceeding 0%, the $Ga_2O_3$ component is an optional component that can improve the chemical durability (acid resistance) of glass while enhancing the devitrification resistance of melted glass.

On the other hand, through adjustment of the $Ga_2O_3$ component content to 10.0% or less, the liquidus temperature of glass can be reduced to enhance the devitrification resistance. Therefore, the $Ga_2O_3$ component content is preferably adjusted to not more than 10.0%, more preferably less than 8.0%, even more preferably less than 5.0%, and still more preferably less than 3.0%.

Materials such as $Ga_2O_3$ and $Ga(OH)_3$ can be used for the $Ga_2O_3$ component.

When contained in an amount exceeding 0%, the $Bi_2O_3$ component is an optional component that may increase the refractive index and reduce the glass transition point.

On the other hand, through adjustment of the $Bi_2O_3$ component content to 10.0% or less, the liquidus temperature of glass can be reduced to enhance the devitrification resistance. Therefore, the $Bi_2O_3$ component content is preferably adjusted to not more than 10.0%, more preferably less than 8.0%, even more preferably less than 5.0%, still more preferably less than 3.0%, even still more preferably less than 1.0%, and most preferably 0%.

Materials such as $Bi_2O_3$ can be used for the $Bi_2O_3$ component.

When contained in an amount exceeding 0%, the $TeO_2$ component is an optional component that may increase the refractive index and reduce the glass transition point.

On the other hand, $TeO_2$ may be alloyed with platinum when glass materials are melted in a crucible made of platinum or a melting bath in which a portion in contact with melted glass is made of platinum. Therefore, the $TeO_2$ component content is preferably adjusted to not more than 10.0%, more preferably less than 8.0%, even more preferably less than 5.0%, still more preferably less than 3.0%, and even still more preferably less than 1.0%.

Materials such as $TeO_2$ can be used for the $TeO_2$ component.

When contained in an amount exceeding 0%, the $CsO_2$ component is an optional component that can improve the melting properties of glass and reduce the glass transition point.

On the other hand, the refractive index of glass is not easily reduced and devitrification of glass can be minimized. Therefore, the $CsO_2$ component content is preferably adjusted to not more than 3.0%, more preferably less than 2.0%, even more preferably less than 1.0%, still more preferably less than 0.1%, and most preferably 0%.

Materials such as $Cs_2CO_3$ and $CsNO_3$ can be used for the $CsO_2$ component.

When contained in an amount exceeding 0%, the $SnO_2$ component is an optional component that may clarify melted glass through reduction of its oxidation while increasing the visible light transmittance of glass.

On the other hand, through adjustment of the $SnO_2$ component content to 3.0% or less, coloration of glass due to reduction of melted glass and devitrification of glass can be minimized. Further, melting equipment may have a longer lifetime because of reduction of alloying of the $SnO_2$ component with the melting equipment (in particular noble metal such as Pt). Therefore, the $SnO_2$ component content is preferably adjusted to not more than 3.0%, more preferably less than 1.0%, even more preferably less than 0.5%, and still more preferably less than 0.1%.

Materials such as $SnO$, $SnO_2$, $SnF_2$, and $SnF_4$ can be used for the $SnO_2$ component.

When contained in an amount exceeding 0%, the $Sb_2O_3$ component is an optional component that enables degassing of melted glass.

On the other hand, when the $Sb_2O_3$ content is too large, the transmittance in the short wavelength range of the visible light region is reduced. Therefore, the $Sb_2O_3$ component content is preferably adjusted to not more than 3.0%, more preferably less than 2.0%, even more preferably less than 1.0%, and still more preferably less than 0.5%.

Materials such as $Sb_2O_3$, $Sb_2O_5$, and $Na_2H_2Sb_2O_7 \cdot 5H_2O$ can be used for the $Sb_2O_3$ component.

The component for clarification and degassing of glass is not limited to the $Sb_2O_3$ component described above but clarifying agents and degassing agents known in the field of glass production, or combinations thereof may be used.

When contained in an amount exceeding 0%, the F component is an optional component that can increase the Abbe number of glass, reduce the glass transition point, and improve the devitrification resistance.

However, when the F component content, i.e., the total amount of F in fluorides substituted with a part or the whole of one or more than one oxide of each of the metallic elements as described above exceeds 15.0%, the volatilization volume of the F component is increased and therefore stable optical constants are not easily obtained, and homogeneous glass is not easily obtained. Further, the Abbe number is increased more than necessary.

Therefore, the F component content is preferably adjusted to not more than 15.0%, more preferably less than 10.0%, even more preferably less than 5.0%, and still more preferably less than 3.0%.

Materials such as $ZrF_4$, $AlF_3$, $NaF$, and $CaF_2$ can be used for the F component.

The total amount (total mass) of the $B_2O_3$ component and the $Nb_2O_5$ component is preferably less than 20.0%. The acid resistance can be thereby improved while the Abbe number ($v_d$) lies within a desired range. Therefore, the total mass $B_2O_3 + Nb_2O_5$ is preferably adjusted to less than 20.0%, more preferably less than 18.0%, even more preferably less than 15.0%, still more preferably less than 13.0%, even still more preferably less than 12.0%, and still even more preferably less than 11.0%.

On the other hand, the devitrification resistance can be improved by adjusting the total amount (total mass) of

the $B_2O_3$ component and the $Nb_2O_5$ component to more than 0%. Therefore, the total mass $B_2O_3 + Nb_2O_5$ may be preferably adjusted to more than 0%, more preferably more than 3.0%, even more preferably more than 5.0%, and still more preferably more than 6.0%.

The total amount (total mass) of the $TiO_2$ component and the $ZrO_2$ component is preferably less than 35.0%.

The Abbe number ($v_d$) can be thereby less reduced. Therefore, the total mass $TiO_2 + ZrO_2$ is adjusted to have an upper limit of preferably less than 35.0%, more preferably not more than 33.0%, even more preferably less than 30.0%, still more preferably less than 28.0%, and even still more preferably not more than 25.0%.

On the other hand, the refractive index of glass can be increased by adjusting the total amount (total mass) of the $TiO_2$ component and the $ZrO_2$ component to more than 0%. Therefore, the total mass $TiO_2 + ZrO_2$ may be preferably adjusted to more than 0%, more preferably not less than 5.0%, even more preferably more than 8.0%, still more preferably more than 10.0%, even still more preferably more than 13.0%, and still even more preferably more than 15.0%.

The total amount (total mass) of the $ZrO_2$ component, $Nb_2O_5$ component, $WO_3$ component, and ZnO component is preferably not less than 5.0%.

The Abbe number ($v_d$) can be thereby adjusted within a desired range. Therefore, the total mass $ZrO_2 + Nb_2O_5 + WO_3 + ZnO$ may be preferably adjusted to not less than 5.0%, more preferably more than 7.0%, even more preferably more than 9.0%, still more preferably more than 11.0%, and even still more preferably more than 13.0%.

On the other hand, the devitrification resistance of glass can be enhanced by adjusting the total amount (total mass) of the $ZrO_2$ component, $Nb_2O_5$ component, $WO_3$ component, and ZnO component to 60.0% or less. Therefore, the total mass $ZrO_2 + Nb_2O_5 + WO_3 + ZnO$ may be preferably adjusted to not more than 60.0%, more preferably less than 55.0%, even more preferably less than 50.0%, and still more preferably less than 48.0%.

The total amount (total mass) of the contained $Ln_2O_3$ component (where Ln is one or more selected from the group consisting of La, Gd, Y, Yb, and Lu) is preferably not less than 15.0% but not more than 65.0%.

The refractive index and the Abbe number of glass can be increased by particularly adjusting the total amount to 15.0% or more, and glass having desired refractive index and Abbe number can be therefore easily obtained. Accordingly, the total mass of the $Ln_2O_3$ component is preferably adjusted to not less than 15.0%, more preferably more than 16.0%, even more preferably more than 18.0%, and still more preferably more than 20.0%.

On the other hand, the liquidus temperature of glass is reduced by adjusting the total amount to 65.0% or less, and devitrification of glass can be therefore minimized. The Abbe number can also be prevented from increasing more than necessary. Therefore, the total mass of the $Ln_2O_3$ component is preferably adjusted to not more than 65.0%, more preferably less than 60.0%, even more preferably less than 55.0%, and still more preferably less than 50.0%.

The total amount (total mass) of the contained RO component (where R is one or more selected from the group consisting of Mg, Ca, Sr, and Ba) is preferably not more than 35.0%. The refractive index can be thereby less reduced while also enhancing the stability of glass. Therefore, the total mass of the RO component is preferably adjusted to not more than 35.0%, more preferably less than 33.0%, even more preferably less than 30.0%, and still more preferably less than 29.0%.

The total amount (total mass) of the contained $Rn_2O$ component (where Rn is one or more selected from the group consisting of Li, Na, and K) is preferably not more than 10.0%. This results in less reduced viscosity of melted glass, less easily reduced refractive index of glass, and minimized devitrification of glass. Therefore, the total mass of the $Rn_2O$ component is preferably adjusted to not more than 10.0%, more preferably less than 8.0%, even more preferably less than 5.0%, and still more preferably less than 3.0%.

(Optical Glass According to Second Aspect)

An optical glass according to the second aspect of the invention comprises, by mass%, not less than 10.0% but not more than 50.0% of an $SiO_2$ component; not less than 15.0% but not more than 60.0% of an $La_2O_3$ component; not less than 0.0% but less than 15% of a $TiO_2$ component, wherein the optical glass has a mass ratio ($B_2O_3/SiO_2$) of not more than 1.0, a refractive index ($n_d$) of not less than 1.60 but not more than 1.85, and an Abbe number ($v_d$) of not less than 33 but not more than 62. In optical glass containing the $SiO_2$ component and the $La_2O_3$ component as its main components, glass showing high acid resistance while also having a refractive index ($n_d$) of not less than 1.60 and an Abbe number ($v_d$) of not less than 33 but not more than 62 is easily obtained.

In addition, the optical glass according to the second aspect of the invention can be suitably used in applications in which visible light is transmitted by high visible light transmittance.

<Essential Components and Optional Components>

In the optical glass of the invention having high durability, the $SiO_2$ component is an essential component as an oxide for glass formation. In particular, adjustment of the $SiO_2$ component content to 10.0% or more leads to higher resistance of glass to acids, less degree of abrasion, and higher glass viscosity. Therefore, the lower limit of the $SiO_2$

component content is preferably adjusted to 10.0%, more preferably 15.0%, even more preferably 20.0%, and still more preferably 25.0%.

On the other hand, adjustment of the $SiO_2$ component content to 50.0% or less leads to easy obtainment of a larger refractive index and improved deterioration of the devitrification resistance. Therefore, the $SiO_2$ component content is preferably adjusted to not more than 50.0%, more preferably less than 47.0%, even more preferably less than 45.0%, and still more preferably less than 43.0%.

Materials such as $SiO_2$, $K_2SiF_6$, $Na_2SiF_6$, and $ZrSiO_4$ can be used for the $SiO_2$ component.

The $La_2O_3$ component is an essential component to increase the refractive index and Abbe number of glass. Therefore, the $La_2O_3$ component content is preferably adjusted to not less than 15.0%, more preferably more than 16.0%, even more preferably more than 18.0%, and still more preferably more than 20.0%.

On the other hand, adjustment of the $La_2O_3$ component content to 60.0% or less leads to enhanced glass stability, whereby devitrification can be minimized while preventing the Abbe number from increasing more than necessary. The melting properties of glass materials can also be enhanced. Therefore, the $La_2O_3$ component content is preferably adjusted to not more than 60.0%, more preferably less than 58.0%, and even more preferably less than 55.0%.

Materials such as $La_2O_3$ and $La(NO_3)_3 \cdot XH_2O$ (X is an arbitrary integer) can be used for the $La_2O_3$ component.

When contained in an amount exceeding 0%, the $TiO_2$ component is an optional component that may increase the refractive index of glass and improve the stability through reduction of the liquidus temperature of glass.

On the other hand, through adjustment of the $TiO_2$ component content to less than 15.0%, devitrification due to the excessively contained $TiO_2$ component can be minimized while less reducing the visible light transmittance of glass (particularly at a wavelength of not more than 500 nm). This also minimizes reduction of the Abbe number. Therefore, the $TiO_2$ component content is preferably adjusted to less than 15.0%, more preferably less than 13.0%, even more preferably less than 11.0%, still more preferably less than 10.0%, and even still more preferably less than 9.0%.

Materials such as $TiO_2$ can be used for the $TiO_2$ component.

The ratio (mass ratio) of the $B_2O_3$ component content to the $SiO_2$ component content is preferably not more than 1.0.

Glass that has improved acid resistance and may withstand prolonged use can be easily obtained by adjusting the mass ratio to 1.0 or less. Therefore, the $B_2O_3/SiO_2$ mass ratio is preferably adjusted to not more than 1.0, more preferably not more than 0.98, even more preferably not more than 0.90, still more preferably not more than 0.80, and even still more preferably not more than 0.70.

When contained in an amount exceeding 0%, the ZnO component is an optional component that may enhance material melting properties, promote degassing of melted glass, and improve stability of glass. The ZnO component is also a component that can reduce coloration of glass owing to the melting time that can be shortened or other reasons. The ZnO component is also a component that can reduce the glass transition point and improve the chemical durability. Therefore, the ZnO component content may be preferably adjusted to more than 0%, more preferably more than 1.0%, even more preferably more than 2.5%, still more preferably more than 4.5%, even still more preferably more than 6.5%, and still even more preferably more than 8.5%.

On the other hand, through adjustment of the ZnO component content to 35.0% or less, the refractive index of glass can be less reduced while also minimizing devitrification due to excessively lowered viscosity. Therefore, the ZnO component content is preferably adjusted to not more than 35.0%, more preferably less than 33.0%, even more preferably less than 31.0%, and still more preferably less than 29.0%.

Materials such as ZnO and $ZnF_2$ can be used for the ZnO component.

When contained in an amount exceeding 0%, the $ZrO_2$ component is an optional component that can increase the refractive index and Abbe number of glass and enhance the devitrification resistance. Therefore, the $ZrO_2$ component content may be preferably adjusted to more than 0%, more preferably more than 1.0%, and even more preferably more than 2.0%.

On the other hand, through adjustment of the $ZrO_2$ component content to 20.0% or less, devitrification due to the excessively contained $ZrO_2$ component can be minimized. Therefore, the $ZrO_2$ component content is preferably adjusted to not more than 20.0%, more preferably less than 18.0%, even more preferably less than 16.0%, still more preferably less than 14.0%, and most preferably not more than 10.0%.

Materials such as $ZrO_2$ and $ZrF_4$ can be used for the $ZrO_2$ component.

When contained in an amount exceeding 0%, the $Al_2O_3$ component is an optional component that can improve the chemical durability of glass while enhancing the devitrification resistance of melted glass. Therefore, the $Al_2O_3$ component content may be preferably adjusted to more than 0%, more preferably more than 1.0%, even more preferably more than 2.5%, still more preferably more than 5.0%, and even still more preferably more than 7.5%.

On the other hand, through adjustment of the $Al_2O_3$ component content to 20.0% or less, the liquidus temperature of glass can be reduced to enhance the devitrification resistance. Therefore, the $Al_2O_3$ component content is preferably adjusted to not more than 20.0%, more preferably less than 18.0%, even more preferably less than 16.5%, still more preferably less than 15.0%, and most preferably not more than 13.0%.

Materials such as $Al_2O_3$, $Al(OH)_3$, and $AlF_3$ can be used for the $Al_2O_3$ component.

When contained in an amount exceeding 0%, the $Y_2O_3$ component is an optional component that may reduce material costs of glass while keeping a high refractive index and a high Abbe number and can reduce the specific gravity of glass more than using other rare-earth components. Therefore, the $Y_2O_3$ component content may be preferably adjusted to more than 0%, more preferably more than 1.0%, and even more preferably more than 3.0%.

On the other hand, through adjustment of the $Y_2O_3$ component content to 25.0% or less, the stability of glass can be enhanced while less reducing the refractive index of glass. Deterioration of the melting properties of glass materials can also be improved. Therefore, the $Y_2O_3$ component content is preferably adjusted to not more than 25.0%, more preferably less than 23.0%, and even more preferably less than 20.0%.

Materials such as $Y_2O_3$ and $YF_3$ can be used for the $Y_2O_3$ component.

When contained in an amount exceeding 0%, the $B_2O_3$ component is an optional component as a glass-forming oxide that may reduce the liquidus temperature while enhancing the devitrification resistance.

On the other hand, through adjustment of the $B_2O_3$ component content to 20.0% or less, a larger refractive index can be easily obtained while also improving deterioration of the chemical durability and suppressing an increase in degree of abrasion. Therefore, the $B_2O_3$ component content is preferably adjusted to not more than 20.0%, more preferably less than 16.0%, even more preferably less than 13.0%, and still more preferably less than 10.0%.

Materials such as $H_3BO_3$, $Na_2B_4O_7$, $Na_2B_4O_7 \cdot 10H_2O$, and $BPO_4$ can be used for the $B_2O_3$ component.

When contained in an amount exceeding 0%, the $Nb_2O_5$ component is an optional component that may increase the refractive index of glass and enhance the devitrification resistance through reduction of the liquidus temperature of glass.

On the other hand, through adjustment of the $Nb_2O_5$ component content to less than 15.0%, devitrification due to the excessively contained $Nb_2O_5$ component can be minimized while less reducing the visible light transmittance of glass (particularly at a wavelength of not more than 500 nm). This also minimizes reduction of the Abbe number. Therefore, the $Nb_2O_5$ component content is preferably adjusted to less than 15.0%, more preferably less than 13.0%, even more preferably less than 9.0%, still more preferably less than 7.0%, and even still more preferably less than 5.0%.

Materials such as $Nb_2O_5$ can be used for the $Nb_2O_5$ component.

When contained in an amount exceeding 0%, the $WO_3$ component is an optional component that allows glass to have a higher refractive index, a lower glass transition point and enhanced devitrification resistance while reducing coloration of glass due to other high refractive index components.

On the other hand, through adjustment of the $WO_3$ component content to less than 10.0%, material costs of glass can be reduced. Further, coloration of glass due to the $WO_3$ component can be reduced to increase the visible light transmittance. Therefore, the $WO_3$ component content is preferably adjusted to less than 10.0%, more preferably less than 5.0%, even more preferably less than 3.0%, still more preferably less than 1.0%, even still more preferably less than 0.5%, and still even more preferably less than 0.1%.

Materials such as $WO_3$ can be used for the $WO_3$ component.

When contained in an amount exceeding 0%, the $Gd_2O_3$ component is an optional component that may increase the refractive index of glass.

However, when the $Gd_2O_3$ component is contained in a large amount, production cost is increased due to its high material cost. An increase in Abbe number of glass can be suppressed by adjusting the $Gd_2O_3$ component content to 25.0% or less. Therefore, the $Gd_2O_3$ component content is preferably adjusted to not more than 25.0%, more preferably less than 23.0%, and even more preferably less than 20.0%.

Materials such as $Gd_2O_3$ and $GdF_3$ can be used for the $Gd_2O_3$ component.

When contained in an amount exceeding 0%, the $Yb_2O_3$ component is an optional component that may increase the refractive index of glass.

However, when the $Yb_2O_3$ component is contained in a large amount, production cost is increased due to its high material cost. An increase in Abbe number of glass can be suppressed by adjusting the $Yb_2O_3$ component content to less than 5.0%. Therefore, the $Yb_2O_3$ component content is preferably adjusted to less than 5.0%, more preferably less than 3.0%, even more preferably less than 2.0%, still more preferably less than 0.5%, and even still more preferably less than 0.1%.

Materials such as $Yb_2O_3$ can be used for the $Yb_2O_3$ component.

When contained in an amount exceeding 0%, the $Ta_2O_5$ component is an optional component that may increase the refractive index of glass and enhance the devitrification resistance.

However, when the $Ta_2O_5$ component is contained in a large amount, production cost is increased due to its high material cost. Further, adjustment of the $Ta_2O_5$ component content to less than 5.0% leads to a lower melting temperature of the material to realize reduction of energy required for melting the material, and therefore costs involved in optical glass production can also be reduced. Therefore, the $Ta_2O_5$ component content is preferably adjusted to less than 5.0%, more preferably less than 3.0%, even more preferably less than 1.0%, still more preferably less than 0.5%, and even still more preferably less than 0.1%. It is most preferable not to contain the $Ta_2O_5$ component from the viewpoint of reducing the material cost.

Materials such as $Ta_2O_5$ can be used for the $Ta_2O_5$ component.

When contained in an amount exceeding 0%, the MgO component is an optional component that can adjust the refractive index, melting properties, and devitrification resistance of glass.

Through adjustment of the MgO component content to 15.0% or less, the refractive index can be less reduced while also minimizing devitrification due to these components excessively contained. Therefore, the MgO component content is preferably adjusted to not more than 15.0%, more preferably not more than 10.0%, even more preferably less than 5.0%, still more preferably less than 3.0%, and even still more preferably less than 1.0%.

Materials such as $MgCO_3$ and $MgF_2$ can be used for the MgO component.

When contained in an amount exceeding 0%, the CaO component is an optional component that can adjust the refractive index, melting properties, and devitrification resistance of glass.

Also through adjustment of the CaO component content to 15.0% or less, a desired refractive index can be easily obtained while minimizing devitrification due to these components excessively contained. Therefore, the CaO component content is preferably adjusted to not more than 15.0%, more preferably not more than 10.0%, even more preferably less than 5.0%, still more preferably less than 3.0%, and even still more preferably less than 1.0%.

Materials such as $CaCO_3$ and $CaF_2$ can be used for the CaO component.

When contained in an amount exceeding 0%, the SrO component is an optional component that can adjust the refractive index, melting properties, and devitrification resistance of glass.

Also through adjustment of the SrO component content to 15.0% or less, a desired refractive index can be easily obtained while minimizing devitrification due to these components excessively contained. Therefore, the SrO component content is preferably adjusted to not more than 15.0%, more preferably not more than 10.0%, even more preferably less than 5.0%, still more preferably less than 3.0%, and even still more preferably less than 1.0%.

Materials such as $Sr(NO_3)_2$ and $SrF_2$ can be used for the SrO component.

When contained in an amount exceeding 0%, the BaO component is an optional component that can adjust the refractive index, melting properties, and devitrification resistance of glass.

Also through adjustment of the BaO component content to 15.0% or less, a desired refractive index can be easily obtained while minimizing devitrification due to these components excessively contained. Therefore, the BaO component content is preferably adjusted to not more than 15.0%, more preferably not more than 10.0%, even more preferably less than 5.0%, still more preferably less than 3.0%, and even still more preferably less than 1.0%.

Materials such as $BaCO_3$, $Ba(NO_3)_2$, and $BaF_2$ can be used for the BaO component.

When contained in an amount exceeding 0%, the $Li_2O$ component is an optional component that can improve the melting properties of glass and reduce the glass transition point.

On the other hand, adjustment of the $Li_2O$ component content to 10.0% or less can lead to improved deterioration of the chemical durability (acid resistance), a less easily reduced refractive index of glass, and minimized devitrification of glass. Further, reduction of the $Li_2O$ component content leads to enhanced viscosity of glass, and striae of glass can be therefore reduced. Accordingly, the $Li_2O$ component content is preferably adjusted to not more than 10.0%, more preferably less than 5.0%, even more preferably less than 3.0%, still more preferably less than 1.0%, even still more preferably less than 0.5%, and still even more preferably less than 0.1%.

Materials such as $Li_2CO_3$, $LiNO_3$, and $Li_2CO_3$ can be used for the $Li_2O$ component.

When contained in an amount exceeding 0%, the $Na_2O$ component is an optional component that can improve the melting properties of glass and reduce the glass transition point.

On the other hand, adjustment of the $Na_2O$ component content to 10.0% or less can lead to a less easily reduced refractive index of glass, and minimized devitrification of glass. Therefore, the $Na_2O$ component content is preferably adjusted to not more than 10.0%, more preferably less than 5.0%, even more preferably less than 3.0%, still more preferably less than 1.0%, even still more preferably less than 0.5%, and still even more preferably less than 0.1%.

Materials such as $Na_2CO_3$, $NaNO_3$, $NaF$, and $Na_2SiF_6$ can be used for the $Na_2O$ component.

When contained in an amount exceeding 0%, the $K_2O$ component is an optional component that can improve the melting properties of glass and reduce the glass transition point.

On the other hand, adjustment of the $K_2O$ component content to 10.0% or less can lead to a less easily reduced refractive index of glass, a suppressed increase in degree of abrasion, and minimized devitrification of glass. Therefore, the $K_2O$ component content is preferably adjusted to not more than 10.0%, more preferably less than 5.0%, even more preferably less than 3.0%, still more preferably less than 1.0%, even still more preferably less than 0.5%, and still even more preferably less than 0.1%.

Materials such as $K_2CO_3$, $KNO_3$, $KF$, $KHF_2$, and $K_2SiF_6$ can be used for the $K_2O$ component.

When contained in an amount exceeding 0%, the $P_2O_5$ component is an optional component that may reduce the liquidus temperature of glass to enhance the devitrification resistance.

On the other hand, adjustment of the $P_2O_5$ component content to 10.0% or less can lead to improved deterioration of the chemical durability (acid resistance) of glass and a suppressed increase in degree of abrasion. Therefore, the

$P_2O_5$ component content is preferably adjusted to not more than 10.0%, more preferably less than 5.0%, and even more preferably less than 3.0%.

Materials such as $Al(PO_3)_3$, $Ca(PO_3)_2$, $Ba(PO_3)_2$, $BPO_4$, and $H_3PO_4$ can be used for the $P_2O_5$ component.

When contained in an amount exceeding 0%, the $GeO_2$ component is an optional component that can increase the refractive index of glass and improve its devitrification resistance.

However, when $GeO_2$ is contained in a large amount, production cost is increased due to its high material cost. Therefore, the $GeO_2$ component content is preferably adjusted to not more than 10.0%, more preferably less than 5.0%, even more preferably less than 3.0%, still more preferably less than 1.0%, and even still more preferably less than 0.1%. The $GeO_2$ component may not be contained from the viewpoint of reducing the material cost.

Materials such as $GeO_2$ can be used for the $GeO_2$ component.

When contained in an amount exceeding 0%, the $Ga_2O_3$ component is an optional component that can improve the chemical durability of glass while enhancing the devitrification resistance of melted glass.

On the other hand, through adjustment of the $Ga_2O_3$ component content to 10.0% or less, the liquidus temperature of glass can be reduced to enhance the devitrification resistance. Therefore, the $Ga_2O_3$ component content is preferably adjusted to not more than 10.0%, more preferably less than 8.0%, even more preferably less than 5.0%, and still more preferably less than 3.0%.

Materials such as $Ga_2O_3$ and $Ga(OH)_3$ can be used for the $Ga_2O_3$ component.

When contained in an amount exceeding 0%, the $Bi_2O_3$ component is an optional component that may increase the refractive index and reduce the glass transition point.

On the other hand, through adjustment of the $Bi_2O_3$ component content to 10.0% or less, the liquidus temperature of glass can be reduced to enhance the devitrification resistance. Therefore, the $Bi_2O_3$ component content is preferably adjusted to not more than 10.0%, more preferably less than 8.0%, even more preferably less than 5.0%, still more preferably less than 3.0%, even still more preferably less than 1.0%, and most preferably 0%.

Materials such as $Bi_2O_3$ can be used for the $Bi_2O_3$ component.

When contained in an amount exceeding 0%, the $TeO_2$ component is an optional component that may increase the refractive index and reduce the glass transition point.

On the other hand, $TeO_2$ may be alloyed with platinum when glass materials are melted in a crucible made of platinum or a melting bath in which a portion in contact with melted glass is made of platinum. Therefore, the $TeO_2$ component content is preferably adjusted to not more than 10.0%, more preferably less than 8.0%, even more preferably less than 5.0%, still more preferably less than 3.0%, and even still more preferably less than 1.0%.

Materials such as $TeO_2$ can be used for the $TeO_2$ component.

When contained in an amount exceeding 0%, the $CsO_2$ component is an optional component that can improve the melting properties of glass and reduce the glass transition point.

On the other hand, the refractive index of glass is not easily reduced and devitrification of glass can be minimized. Therefore, the $CsO_2$ component content is preferably adjusted to not more than 3.0%, more preferably less than 2.0%, even more preferably less than 1.0%, still more preferably less than 0.1%, and most preferably 0%.

Materials such as $Cs_2CO_3$ and $CsNO_3$ can be used for the $CsO_2$ component.

When contained in an amount exceeding 0%, the $SnO_2$ component is an optional component that may clarify melted glass through reduction of its oxidation while increasing the visible light transmittance of glass.

On the other hand, through adjustment of the $SnO_2$ component content to 3.0% or less, coloration of glass due to reduction of melted glass and devitrification of glass can be minimized. Further, melting equipment may have a longer lifetime because of reduction of alloying of the $SnO_2$ component with the melting equipment (in particular noble metal such as Pt). Therefore, the $SnO_2$ component content is preferably adjusted to not more than 3.0%, more preferably less than 1.0%, even more preferably less than 0.5%, and still more preferably less than 0.1%.

Materials such as SnO, $SnO_2$, $SnF_2$, and $SnF_4$ can be used for the $SnO_2$ component.

When contained in an amount exceeding 0%, the $Sb_2O_3$ component is an optional component that enables degassing of melted glass.

On the other hand, when the $Sb_2O_3$ content is too large, the transmittance in the short wavelength range of the visible light region is reduced. Therefore, the $Sb_2O_3$ component content is preferably adjusted to not more than 3.0%, more preferably less than 2.0%, even more preferably less than 1.0%, and still more preferably less than 0.5%.

Materials such as $Sb_2O_3$, $Sb_2O_5$, and $Na_2H_2Sb_2O_7 \cdot 5H_2O$ can be used for the $Sb_2O_3$ component.

The component for clarification and degassing of glass is not limited to the $Sb_2O_3$ component described above but clarifying agents and degassing agents known in the field of glass production, or combinations thereof may be used.

When contained in an amount exceeding 0%, the F component is an optional component that can increase the Abbe number of glass, reduce the glass transition point, and improve the devitrification resistance.

However, when the F component content, i.e., the total amount of F in fluorides substituted with a part or the whole of one or more than one oxide of each of the metallic elements as described above exceeds 15.0%, the volatilization volume of the F component is increased and therefore stable optical constants are not easily obtained, and homogeneous glass is not easily obtained. Further, the Abbe number is increased more than necessary.

Therefore, the F component content is preferably adjusted to not more than 15.0%, more preferably less than 10.0%, even more preferably less than 5.0%, and still more preferably less than 3.0%.

Materials such as $ZrF_4$, $AlF_3$, NaF, and $CaF_2$ can be used for the F component.

The total amount (total mass) of the $B_2O_3$ component and the $Nb_2O_5$ component is preferably less than 20.0%. The acid resistance can be thereby improved while the Abbe number ($v_d$) lies within a desired range. Therefore, the total mass $B_2O_3 + Nb_2O_5$ is preferably adjusted to less than 20.0%, more preferably less than 18.0%, even more preferably less than 15.0%, still more preferably less than 13.0%, even still more preferably less than 12.0%, and still even more preferably less than 11.0%.

The total amount (total mass) of the contained $Ln_2O_3$ component (where Ln is one or more selected from the group consisting of La, Gd, Y, Yb, and Lu) is preferably not less than 15.0% but not more than 65.0%.

The refractive index and the Abbe number of glass can be increased by particularly adjusting the total amount to 15.0% or more, and glass having desired refractive index and Abbe number can be therefore easily obtained. Accordingly, the total mass of the $Ln_2O_3$ component is preferably adjusted to not less than 15.0%, more preferably more than 16.0%, even more preferably more than 18.0%, and still more preferably more than 20.0%.

On the other hand, the liquidus temperature of glass is reduced by adjusting the total amount to 65.0% or less, and devitrification of glass can be therefore minimized. The Abbe number can also be prevented from increasing more than necessary. Therefore, the total mass of the $Ln_2O_3$ component is preferably adjusted to not more than 65.0%, more preferably less than 60.0%, even more preferably less than 55.0%, and still more preferably less than 50.0%.

The total amount (total mass) of the contained RO component (where R is one or more selected from the group consisting of Mg, Ca, Sr, and Ba) is preferably not more than 25.0%. The refractive index can be thereby less reduced while also enhancing the stability of glass. Therefore, the total mass of the RO component is preferably adjusted to not more than 25.0%, more preferably less than 20.0%, even more preferably less than 15.0%, and still more preferably less than 10.0%.

The total amount (total mass) of the contained $Rn_2O$ component (where Rn is one or more selected from the group consisting of Li, Na, and K) is preferably not more than 10.0%. This results in less reduced viscosity of melted glass, less easily reduced refractive index of glass, and minimized devitrification of glass. Therefore, the total mass of the $Rn_2O$ component is preferably adjusted to not more than 10.0%, more preferably less than 8.0%, even more preferably less than 5.0%, and still more preferably less than 3.0%.

<Components Not to Be Contained>

Next, components not to be contained in the optical glass of the invention and components whose inclusion is not preferred are described.

Other components can be added when necessary as long as the properties of the glass of the present invention are not impaired. However, even when used alone or in combination in small amounts, transition metal components except Ti, Zr, Nb, W, La, Gd, Y, Yb, and Lu as exemplified by V, Cr, Mn, Fe, Co, Ni, Cu, Ag and Mo have the property of causing glass coloration to generate absorption at specific wavelengths in the visible region. Accordingly, particularly optical glass using wavelengths in the visible region is preferably substantially free from these components.

Further, lead compounds such as PbO and arsenic compounds such as $As_2O_3$ are components each having a high environmental burden, and therefore, it is desirable for the optical glass to be substantially free from such compounds, in other words, to by no means contain such compounds except inevitable incorporation.

In addition, there is a tendency in recent years to refrain from using components such as Th, Cd, Tl, Os, Be, and Se as hazardous chemical substances, and environmental measures are necessary not only in the glass production step but also in the processing step and also until the disposal after commercialization. Accordingly, when importance is to be placed on environmental effects, the optical glass is preferably substantially free from these components.

[Production Method]

For instance, the optical glass of the invention is produced as follows: More specifically, the optical glass is produced by a process which involves uniformly mixing the materials described above so that the respective components are contained in amounts within specific ranges, charging the resulting mixture into a platinum crucible, melting the mixture in an electric furnace in a temperature range of 1,100 to 1,550°C for 2 to 5 hours in accordance with the degree of difficulty in melting the glass materials, stirring the melted mixture for homogenization, allowing the mixture to cool to an appropriate temperature, casting the mixture into a mold, and allowing the cast mixture to cool slowly.

Glass materials having high melting properties are preferably used in this process. This enables melting at lower temperatures and melting in a shorter period of time, and therefore productivity of glass can be enhanced while reducing production costs. Less colored glass can be easily obtained because of reduction in volatilization of components and reactions with the crucible or the like.

[Physical Properties]

The optical glass according to the first aspect of the invention preferably has a high refractive index and a high Abbe number (low dispersion). In particular, the lower limit of the refractive index ($n_d$) of the optical glass according to the invention is preferably 1.78, more preferably 1.79, and even more preferably 1.80. The upper limit of the refractive index ($n_d$) of the optical glass according to the invention may be preferably 1.95, more preferably 1.93, and even more preferably 1.90. The lower limit of the Abbe number ($v_d$) of the optical glass according to the invention is preferably 25, more preferably 27, and even more preferably 29. The upper limit of the Abbe number ($v_d$) of the optical glass according to the invention is preferably 45, more preferably 43, and even more preferably 41.

The optical glass according to the second aspect of the invention preferably has a high refractive index and a high Abbe number (low dispersion). In particular, the lower limit of the refractive index ($n_d$) of the optical glass according to the invention is preferably 1.60, more preferably 1.63, and even more preferably 1.68. The upper limit of the refractive index ($n_d$) of the optical glass according to the invention may be preferably 1.85, and more preferably 1.84. The lower limit of the Abbe number ($v_d$) of the optical glass according to the invention is preferably 33, more preferably 35, and even more preferably 37. The upper limit of the Abbe number ($v_d$) of the optical glass according to the invention is preferably 62, more preferably 57, and even more preferably 55.

By having such optical constants, a large amount of light refraction can be obtained even when an optical element is made thinner. By having such low dispersion, defocus (chromatic aberration) due to light wavelengths can be reduced when the optical glass is used as a single lens. Accordingly, when used, for instance, in combination with an optical element having high dispersion (low Abbe number) to form an optical system, aberration can be reduced as a whole of the optical system to achieve high imaging properties.

The optical glass of the invention is thus useful in optical design, and particularly when an optical system is formed, the optical system can be downsized while achieving high imaging properties, thus leading to a larger degree of freedom in optical design.

The optical glass of the invention preferably has high acid resistance. In particular, the chemical durability (acid resistance) of glass as measured by the powder method according to JOGIS 06-1999 is preferably of Class 1 to Class 3, more preferably of Class 1 to Class 2, and most preferably of Class 1.

This reduces glass fogging due to acid rain or the like when the optical glass is used in a vehicle. Accordingly, an optical element can be more easily formed from glass.

"Acid resistance" as used herein refers to durability of glass against acid attack, and the acid resistance can be measured by the "Measuring Method for Chemical Durability of Optical Glass" according to Japanese Optical Glass Industrial Standards JOGIS 06-1999. Further, "the chemical durability (acid resistance) as measured by the powder method is of Class 1 to Class 3" means that the chemical durability (acid resistance) as measured according to JOGIS 06-1999 is less than 0.65 mass% in terms of a sample mass reduction ratio between before and after measurement.

In the chemical durability (acid resistance), Class 1 indicates that the sample mass reduction ratio between before and after measurement is less than 0.20 mass%, Class 2 indicates that the sample mass reduction ratio between before and after measurement is 0.20 mass% or more but less than 0.35 mass%, Class 3 indicates that the sample mass reduction ratio between before and after measurement is 0.35 mass% or more but less than 0.65 mass%, Class 4 indicates that the sample mass reduction ratio between before and after measurement is 0.65 mass% or more but less than 1.20 mass%, Class 5 indicates that the sample mass reduction ratio between before and after measurement is 1.20 mass% or more but less than 2.20 mass%, and Class 6 indicates that the sample mass reduction ratio between before and after measurement is 2.20 mass% or more.

The optical glass of the invention preferably has a low degree of abrasion. The upper limit of the degree of abrasion of the optical glass according to the invention is preferably 200, more preferably 150, even more preferably 100, still more preferably 80, and even still more preferably 60.

The degree of abrasion means a value obtained by measurement according to JOGIS 10-1994 "Measuring Method for Degree of Abrasion of Optical Glass."

In the optical glass of the invention, the visible light transmittance, and in particular the light transmittance on the short wavelength side of visible light is preferably high and thereby cause less coloration.

Particularly in the optical glass of the invention according to the first aspect, the upper limit of the wavelength ($\lambda_{70}$) indicating a spectral transmittance of 70% in terms of glass transmittance in a sample with a thickness of 10 mm is preferably 500 nm, more preferably 480 nm, even more preferably 450 nm, and still more preferably 420 nm.

Particularly in the optical glass of the invention according to the second aspect, the upper limit of the wavelength ($\lambda_{80}$) indicating a spectral transmittance of 80% in terms of glass transmittance in a sample with a thickness of 10 mm is preferably 500 nm, more preferably 480 nm, even more preferably 450 nm, and still more preferably 420 nm. In the optical glass of the invention, the upper limit of the shortest wavelength ($\lambda_5$) indicating a spectral transmittance of 5% in a sample with a thickness of 10 mm is preferably 400 nm, more preferably 380 nm, even more preferably 370 nm, and still more preferably 360 nm.

The absorption end of glass is thus located in the ultraviolet region or its vicinity and the transparency of the glass with respect to visible light is enhanced, and the optical glass can be therefore preferably used in an optical element such as a lens that may transmit light.

[Preform Material and Optical Element]

A glass molded body can be formed from the produced optical glass using, for instance, polishing processing means, or press molding means such as reheat press molding and precision press molding. More specifically, a glass molded body can be formed by subjecting the optical glass to machining such as grinding and polishing; or by performing polishing processing after performing reheat press molding on a preform for press molding prepared from the optical glass; or by performing precision press molding on a preform prepared by polishing processing or on a preform prepared by known float molding. It should be noted that means for forming the glass molded body is not limited to these means.

As described above, the optical glass of the invention is useful in various optical elements and optical design. More particularly, it is preferable to form an optical element such as a lens or a prism by a process which involves forming a preform from the optical glass of the invention and subjecting the preform to reheat press molding or precision press molding. This enables formation of a large-diameter preform. Accordingly, when an optical element is used in an optical instrument such as a camera or a projector, high-definition and high-precision imaging properties and projection properties can be realized while also increasing the size of the optical element.

EXAMPLES

Table 1 to Table 7 show results of the composition in each of Examples (No. 1 to No. 43) and Comparative Examples (A, B) of the optical glass according to the first aspect of the invention, as well as the refractive index ($n_d$), the Abbe number ($v_d$), the acid resistance, the degree of abrasion, and the wavelengths ($\lambda_5$, $\lambda_{70}$) of the glass, the wavelengths indicating spectral transmittances of 5% and 70%, respectively.

Table 8 to Table 25 show results of the composition in each of Examples (No. 44 to No. 168) and Comparative Examples (C, D) of the optical glass according to the second aspect of the invention, as well as the refractive index ($n_d$), the Abbe number ($v_d$), the acid resistance, the degree of abrasion, and the wavelengths ($\lambda_5$, $\lambda_{80}$) of the glass, the wavelengths indicating spectral transmittances of 5% and 80%, respectively.

The following examples are only for illustrative purposes and the invention should not be construed as being limited to these examples.

The glass in each of Examples of the invention and Comparative Examples was prepared by a process which involves selecting, as component materials, high purity materials used in common optical glass, as exemplified by oxides, hydroxides, carbonates, nitrates, fluorides, hydroxides, and metaphosphate compounds corresponding to the respective components; weighing the materials so as to have a compositional ratio in each of Examples shown in Tables; uniformly mixing the materials; charging the resulting mixture into a platinum crucible; melting the mixture in an electric furnace in a temperature range of 1,100 to 1,550°C for 2 to 5 hours in accordance with the degree of difficulty in melting the glass materials; stirring the melted mixture for homogenization; casting the mixture into a mold, and allowing the cast mixture to cool slowly.

The refractive index ($n_d$) and the Abbe number ($v_d$) of the glass in each of Examples were indicated by values measured with respect to the d-line (587.56 nm) of a helium lamp. Values of the refractive index with respect to the d-line described above, the refractive index ($n_F$) with respect to the F-line (486.13 nm) of a hydrogen lamp, and the refractive index ($n_c$) with respect to the C-line (656.27 nm) of the hydrogen lamp were used to calculate the Abbe number ($v_d$) from the formula: Abbe number

$$(v_d) \ = \ [(n_d-1) \ / \ (n_F \ - \ n_c)].$$

The transmittance of the glass in each of Examples and Comparative Examples was measured by the "Measuring Method for Degree of Coloration of Optical Glass" according to the Japanese Optical Glass Industrial Standards JOGIS 02-2003. According to the invention, the transmittance of glass was measured to determine whether or not there was coloration of glass and the degree of coloration. More specifically, polished members facing each other in parallel and having a thickness of 10 ± 0.1 mm were subjected to measurement of the spectral transmittance at 200 to 800 nm according to JIS Z8722 to determine $\lambda_5$ (wavelength at the transmittance of 5%), $\lambda_{80}$ (wavelength at the transmittance of 80%), and $\lambda_{70}$ (wavelength at the transmittance of 70%).

The acid resistance of the glass in each of Examples and Comparative Examples was measured by the "Measuring Method for Chemical Durability of Optical Glass" according to the Japanese Optical Glass Industrial Standards JOGIS 06-1999. More specifically, a glass sample broken to a particle size of 425 to 600 $\mu$m was put in a specific gravity bottle and the bottle was placed in a platinum basket. The platinum basket was placed in a quartz glass round-bottom flask containing 0.01 N aqueous nitric acid solution, and treated for 60 minutes in a boiled water bath. The mass reduction ratio (mass%) of the glass sample after the treatment was calculated, and was classified as Class 1 when the mass reduction ratio (mass%) was less than 0.20; as Class 2 when the mass reduction ratio was 0.20 or more but less than 0.35; as Class 3 when the mass reduction ratio was 0.35 or more but less than 0.65; as Class 4 when the mass reduction ratio was 0.65 or more but less than 1.20; as Class 5 when the mass reduction ratio was 1.20 or more but less than 2.20; and as Class 6 when the mass reduction ratio was 2.20 or more. In this regard, a smaller class number means more excellent acid resistance of glass.

The degree of abrasion was measured by the "Measuring Method for Degree of Abrasion of Optical Glass" according to JOGIS 10-1994. More specifically, a sample of a glass square sheet with a size of 30 x 30 x 10 mm was placed on a cast-iron flat disk (diameter: 250 mm) rotating horizontally at 60 rpm at a predetermined position 80 mm apart from its center; a polishing liquid obtained by adding 10 g of a lapping material (alumina A abrasive grains) with a grit size of #800 (average grain size: 20 $\mu$m) to 20 mL of water was uniformly supplied to the sample to cause friction while vertically applying a load of 9.8 N (1 kgf); the mass of the sample was measured before and after lapping to determine the abrasion mass; the abrasion mass of a reference sample designated by Japan Optical Glass Manufacturers' Association was determined in the same manner; and the degree of abrasion was calculated by the formula:

```
Degree of abrasion = {(abrasion mass of sample / specific
gravity) / (abrasion mass of reference sample / specific
gravity)} x 100.
```

[Table 1]

| (Unit: mass%) | Example | | | | | | |
|---|---|---|---|---|---|---|---|
| | 1 | 2 | 3 | 4 | 5 | 6 | 7 |
| SiO$_2$ | 22.50 | 22.50 | 22.50 | 22.50 | 22.50 | 22.50 | 22.50 |
| B$_2$O$_3$ | | | | | | | |
| Al$_2$O$_3$ | | 10.00 | 10.00 | 10.00 | 10.00 | 10.00 | 10.00 |
| Y$_2$O$_3$ | | | | 4.24 | 4.24 | 4.24 | 4.24 |
| La$_2$O$_3$ | 20.06 | 20.06 | 25.06 | 25.06 | 28.06 | 32.01 | 35.01 |
| Gd$_2$O$_3$ | | | | | | | |
| TiO$_2$ | 12.04 | 12.04 | 12.04 | 12.04 | 12.04 | 12.04 | 9.04 |
| ZrO$_2$ | 7.44 | 7.44 | 7.44 | 7.44 | 7.44 | 7.44 | 7.44 |
| Nb$_2$O$_5$ | 6.95 | 6.95 | 6.95 | 6.95 | 3.95 | | |
| WO$_3$ | | | | | | | |
| ZnO | 11.58 | 11.58 | 11.58 | 11.58 | 11.58 | 11.58 | 11.58 |
| MgO | | | | | | | |
| CaO | 19.24 | 9.24 | 4.24 | | | | |
| SrO | | | | | | | |
| BaO | | | | | | | |
| Li$_2$O | | | | | | | |
| Na$_2$O | | | | | | | |
| K$_2$O | | | | | | | |

(continued)

| (Unit: mass%) | Example | | | | | | |
|---|---|---|---|---|---|---|---|
| | 1 | 2 | 3 | 4 | 5 | 6 | 7 |
| $P_2O_5$ | | | | | | | |
| $TaO_5$ | | | | | | | |
| $Sb_2O_3$ | 0.20 | 0.20 | 0.20 | 0.20 | 0.20 | 0.20 | 0.20 |
| $SnO_2$ | | | | | | | |
| Total | 100.0 | 100.0 | 100.0 | 100.0 | 100.0 | 100.0 | 100.0 |
| B/Si | 0.000 | 0.000 | 0.000 | 0.000 | 0.000 | 0.000 | 0.000 |
| $Ln_2O_3$ | 20.060 | 20.060 | 25.060 | 29.305 | 32.305 | 36.251 | 39.251 |
| RO | 19.245 | 9.245 | 4.245 | 0.000 | 0.000 | 0.000 | 0.000 |
| $RN_2O$ | 0.000 | 0.000 | 0.000 | 0.000 | 0.000 | 0.000 | 0.000 |
| B+Nb | 6.946 | 6.946 | 6.946 | 6.946 | 3.946 | 0.000 | 0.000 |
| Zr+Nb+W+Zn | 25.96 | 25.96 | 25.96 | 25.96 | 22.96 | 19.02 | 19.02 |
| Ti+Zr | 19.47 | 19.47 | 19.47 | 19.48 | 19.48 | 19.47 | 16.48 |
| $\lambda_{70}$[nm] | 418 | 436 | 441 | 434.5 | 429 | 423 | 411 |
| $\lambda_5$[nm] | 363 | 372 | 375.5 | 374 | 372 | 368 | 361 |
| Refractive index ($n_d$) | 1.854 | 1.825 | 1.835 | 1.848 | 1.843 | 1.836 | 1.823 |
| Abbe number ($v_d$) | 32.7 | 32.4 | 31.8 | 31.8 | 32.9 | 34.4 | 36.7 |
| Acid resistance ($RA_{(P)}$) | 2 | 1 | 1 | 1 | 1 | 1 | 1 |
| Degree of abrasion (Aa) | 125 | 65 | 63 | 63 | 62 | 58 | 59 |

[Table 2]

| (Unit: mass%) | Example | | | | | | |
|---|---|---|---|---|---|---|---|
| | 8 | 19 | 10 | 11 | 12 | 13 | 14 |
| $SiO_2$ | 22.50 | 22.72 | 22.27 | 22.72 | 22.27 | 22.50 | 22.95 |
| $B_2O_3$ | | | | | | | |
| $Al_2O_3$ | | | 0.99 | | 0.99 | 1.00 | |
| $Y_2O_3$ | | | | | | | |
| $La_2O_3$ | 20.06 | 20.26 | 19.86 | 20.26 | 19.86 | 20.06 | 20.46 |
| $Gd_2O_3$ | | | | | | | |
| $TiO_2$ | 12.04 | 12.16 | 11.92 | 12.16 | 11.92 | 12.04 | 12.28 |
| $ZrO_2$ | 7.44 | 7.51 | 7.37 | 7.51 | 7.37 | 7.44 | 7.59 |
| $Nb_2O_5$ | 6.95 | 7.02 | 6.88 | 7.02 | 6.88 | 6.95 | 7.08 |
| $WO_3$ | | | | | | | |
| ZnO | | | | | | | |
| MgO | | | | | | | |
| CaO | | | | | | | |
| SrO | | | | | | | |

(continued)

| (Unit: mass%) | Example | | | | | | |
|---|---|---|---|---|---|---|---|
| | 8 | 19 | 10 | 11 | 12 | 13 | 14 |
| BaO | 28.87 | 29.16 | 28.58 | 29.16 | 28.58 | 28.87 | 29.44 |
| $Li_2O$ | 1.96 | 0.97 | 1.94 | 0.97 | 1.94 | 0.96 | |
| $Na_2O$ | | | | | | | |
| $K_2O$ | | | | | | | |
| $P_2O_5$ | | | | | | | |
| $TaO_5$ | | | | | | | |
| $Sb_2O_3$ | 0.20 | 0.20 | 0.20 | 0.20 | 0.20 | 0.20 | 0.20 |
| $SnO_2$ | | | | | | | |
| Total | 100.0 | 100.0 | 100.0 | 100.0 | 100.0 | 100.0 | 100.0 |
| B/Si | 0.000 | 0.000 | 0.000 | 0.000 | 0.000 | 0.000 | 0.000 |
| $Lri_2O_3$ | 20.060 | 20.262 | 19.861 | 20.262 | 19.861 | 20.060 | 20.460 |
| RO | 28.867 | 29.159 | 28. 581 | 29.159 | 28.581 | 28.867 | 29.443 |
| $Rn_2O$ | 1.956 | 0.966 | 1.937 | 0.966 | 1.937 | 0.956 | 0.000 |
| B+Nb | 6.946 | 7.016 | 6.877 | 7.016 | 6.877 | 6.946 | 7.084 |
| Zr+Nb+W+Zn | 14.38 | 14.53 | 14.24 | 14.53 | 14.24 | 14.38 | 14.67 |
| Ti+Zr | 19.47 | 19.67 | 19.28 | 19.67 | 19.28 | 19.47 | 19.86 |
| $\lambda_{70}$[nm] | 418.5 | 427.5 | 417.5 | 422 | 413 | 417.5 | 446.5 |
| $\lambda_5$[nm] | 364 | 369.5 | 363 | 366 | 362 | 366 | 374.5 |
| Refractive index ($n_d$) | 1.848 | 1.853 | 1.843 | 1.853 | 1.843 | 1.847 | 1.852 |
| Abbe number ($v_d$) | 32.2 | 32.0 1 | 32.4 1 | 32.0 | 32.4 | 32.1 | 31.8 |
| Acid resistance ($RA_{(P)}$) | 1 | | | 1 | 1 | 1 | 1 |
| Degree of abrasion (Aa) | 140 | 134 | 136 | 127 | 130 | 127 | 122 |

[Table 3]

| (Unit: mass%) | Example | | | | | | |
|---|---|---|---|---|---|---|---|
| | 15 | 16 | 17 | 18 | 19 | 20 | 21 |
| $SiO_2$ | 23.68 | 25.00 | 22.95 | 20.82 | 22.26 | 25.55 | 21.83 |
| $B_2O_3$ | | | | | | | |
| $Al_2O_3$ | | | | | 2.97 | | |
| $Y_2O_3$ | | | | | | | |
| $La_2O_3$ | 21.12 | 22.29 | 20.46 | 27.82 | 19.85 | 22.78 | 24.32 |
| $Gd_2O_3$ | | | | | | | |
| $TiO_2$ | 12.67 | 13.37 | 12.28 | 11.14 | 11.91 | 13.67 | 11.68 |
| $ZrO_2$ | 7.83 | 8.27 | 7.59 | 6.89 | 7.36 | 8.45 | 7.22 |
| $Nb_2O_5$ | 7.31 | 7.72 | 7.08 | 6.43 | 6.87 | 7.89 | 6.74 |
| $WO_3$ | | | | | | | |

(continued)

| (Unit: mass%) | Example | | | | | | |
|---|---|---|---|---|---|---|---|
| | 15 | 16 | 17 | 18 | 19 | 20 | 21 |
| ZnO | | | | | | | |
| MgO | | | | | | | |
| CaO | | | | | | | |
| SrO | | | | | | | |
| BaO | 25.12 | 20.96 | 29.44 | 26.72 | 28.57 | 21.43 | 28.01 |
| $Li_2O$ | 2.06 | 2.17 | | | | | |
| $Na_2O$ | | | | | | | |
| $K_2O$ | | | | | | | |
| $P_2O_5$ | | | | | | | |
| $TaO_5$ | | | | | | | |
| $Sb_2O_3$ | 0.21 | 0.22 | 0.20 | 0.18 | 0.20 | 0.23 | 0.19 |
| $SnO_2$ | | | | | | | |
| Total | 100.0 | 100.0 | 100.0 | 100.0 | 100.0 | 100.0 | 100.0 |
| B/Si | 0.000 | 0.000 | 0.000 | 0.000 | 0.000 | 0.000 | 0.000 |
| $Ln_2O_3$ | 21.116 | 22.289 | 20.460 | 27.822 | 19.853 | 22.784 | 24.320 |
| RO | 25.123 | 20.963 | 29.443 | 26.718 | 28.569 | 21.429 | 28.014 |
| $Rn_2O$ | 2.059 | 2.174 | 0.000 | 0.000 | 0.000 | 0.000 | 0.000 |
| B+Nb | 7.311 | 7.718 | 7.084 | 6.429 | 6.874 | 7.889 | 6.741 |
| Zr+Nb+W+Zn | 15.14 | 15.98 | 14.67 | 13.31 | 14.24 | 16.34 | 13.96 |
| Ti+Zr | 20.50 | 21.64 | 19.86 | 18.03 | 19.27 | 22.12 | 18.90 |
| $\lambda_{70}$[nm] | 423.5 | 425.5 | 441 | 452 | 445 | 449 | 439 |
| $\lambda_5$ [nm] | 367 | 369 | 374 | 374 | 373 | 379 | 373 |
| Refractive index ($n_d$) | 1.851 | 1.852 | 1.852 | 1.866 | 1.834 | 1.854 | 1.859 |
| Abbe number ($v_d$) | 31.8 | 31.3 | 31.8 | 32.5 | 32.3 | 30.6 | 32.1 |
| Acid resistance ($RA_{(P)}$) | 1 | 1 | 1 | 1 | 1 | 1 | 1 |
| Degree of abrasion (Aa) | 123 | 126 | 115 | 116 | 125 | 125 | 124 |

[Table 4]

| (Unit: mass%) | Example | | | | | | |
|---|---|---|---|---|---|---|---|
| | 22 | 23 | 24 | 25 | 26 | 27 | 28 |
| $SiO_2$ | 22.50 | 22.26 | 26.47 | 22.50 | 22.50 | 22.50 | 22. 50 |
| $B_2O_3$ | | | | | | | |
| $Al_2O_3$ | | 2.97 | | | | | |
| $Y_2O_3$ | | | | | | | |
| $La_2O_3$ | 20.06 | 19.85 | 23.60 | 20.06 | 20.06 | 20.06 | 20.06 |
| $Gd_2O_3$ | | | | | | | |

(continued)

| (Unit: mass%) | Example | | | | | | |
|---|---|---|---|---|---|---|---|
| | 22 | 23 | 24 | 25 | 26 | 27 | 28 |
| $TiO_2$ | 12.04 | 11.91 | 14.16 | 12.04 | 12.04 | 12.04 | 12.04 |
| $ZrO_2$ | 7.44 | 7.36 | 8.75 | 7.44 | 7.44 | 7.44 | 7.44 |
| $Nb_2O_5$ | 6.95 | 6.87 | 8.17 | 6.95 | 6.95 | 6.95 | 6.95 |
| $WO_3$ | | | | | | | |
| ZnO | | | | | 1.96 | 1.96 | 16.39 |
| MgO | | | | | | | |
| CaO | | | | | | | |
| SrO | | | | 14.43 | | 14.43 | |
| BaO | 28.87 | 28.57 | 16.31 | 14.43 | 28.87 | 14.43 | 14.43 |
| $Li_2O$ | 1.96 | | 2.30 | 1.96 | | | |
| $Na_2O$ | | | | | | | |
| $H_2O$ | | | | | | | |
| $P_2O_5$ | | | | | | | |
| $TaO_5$ | | | | | | | |
| $Sb_2O_3$ | 0.20 | 0.20 | 0.23 | 0.20 | 0.20 | 0.20 | 0.20 |
| $SnO_2$ | | | | | | | |
| Total | 100.0 | 100.0 | 100.0 | 100.0 | 100.0 | 100.0 | 100.0 |
| B/Si | 0.000 | 0.000 | 0.000 | 0.000 | 0.000 | 0.000 | 0.000 |
| $L_7O_3$ | 20.060 | 19.853 | 23.600 | 20.060 | 20.060 | 20.060 | 20.060 |
| RO | 28.867 | 28.569 | 16.314 | 28.868 | 28.867 | 28.868 | 14.434 |
| $Rn_2O$ | 1.956 | 0.000 | 2.302 | 1.956 | 0.000 | 0.000 | 0.000 |
| B+Nb | 6.946 | 6.874 | 8.172 | 6.946 | 6.946 | 6.946 | 6.946 |
| Zr+Nb+W+Zn | 14.38 | 14.24 | 16.92 | 14.38 | 16.34 | 16.34 | 30.77 |
| Ti+Zr | 19.47 | 19.27 | 22.91 | 19.47 | 19.48 | 19.47 | 19.47 |
| $\lambda_{70}$[nm] | 414 | 452 | 433 | 430 | 446 | 446 | 450 |
| $\lambda_5$[nm] | 362 | 374 | 373 | 365 | 375 | 371 | 377 |
| Refractive index ($n_d$) | 1.848 | 1.835 | 1.853 | 1.843 | 1.854 | 1.849 | 1.872 |
| Abbe number ($v_d$) | 32.3 | 32.2 | 30.7 | 32.7 | 31.8 | 32.2 | 30.6 |
| Acid resistance ($RA_{(P)}$) | 1 | 1 | 1 | 1 | 1 | 1 | 1 |
| Degree of abrasion (Aa) | 129 | 119 | 123 | 127 | 126 | 128 | 121 |

[Table 5]

| (Unit: mass%) | Example | | | | | | |
|---|---|---|---|---|---|---|---|
| | 29 | 30 | 31 | 32 | 33 | 34 | 35 |
| $SiO_2$ | 22.50 | 22.50 | 22. 50 | 22.50 | 22.50 | 22.50 | 22.50 |
| $B_2O_3$ | | | | | | | |

(continued)

| (Unit: mass%) | Example | | | | | | |
|---|---|---|---|---|---|---|---|
| | 29 | 30 | 31 | 32 | 33 | 34 | 35 |
| $Al_2O_3$ | | | | | | | |
| $Y_2O_3$ | | | | | | | |
| $La_2O_3$ | 20.06 | 20.06 | 20.06 | 20.06 | 20.06 | 20.06 | 20.06 |
| $Gd_2O_3$ | | | | | | | |
| $TiO_2$ | 12.04 | 12.04 | 12.04 | 12.04 | 12.04 | 12.04 | 12.04 |
| $ZrO_2$ | 7.44 | 7.44 | 7.44 | 7.44 | 7.44 | 7.44 | 7.44 |
| $Nb_2O_5$ | 6.95 | 6.95 | 6.95 | 6.95 | 6.95 | 6.95 | 6.95 |
| $WO_3$ | | | | | | | |
| $ZnO$ | 1.96 | 1.96 | 16.39 | 16.39 | 11.58 | 9.17 | 11.58 |
| $MgO$ | | | | | | | |
| $CaO$ | 7.22 | 9.62 | | 14.43 | 19.24 | 21.65 | 19.24 |
| $SrO$ | | | 14.43 | | | | |
| $BaO$ | 21.65 | 19.24 | | | | | |
| $Li_2O$ | | | | | | | |
| $Na_2O$ | | | | | | | |
| $K_2O$ | | | | | | | |
| $P_2O_5$ | | | | | | | |
| $TaO_5$ | | | | | | | |
| $Sb_2O_3$ | 0.20 | 0.20 | 0.20 | 0.20 | 0.20 | 0.20 | 0.20 |
| $SnO_2$ | | | | | | | |
| Total | 100.0 | 100.0 | 100.0 | 100.0 | 100.0 | 100.0 | 100.0 |
| B/Si | 0.000 | 0.000 | 0.000 | 0.000 | 0.000 | 0.000 | 0.000 |
| $Ln_2O_3$ | 20.060 | 20.060 | 20.060 | 20.060 | 20.060 | 20.060 | 20.060 |
| RO | 28.867 | 28.867 | 14.434 | 14.434 | 19.245 | 21.650 | 19.245 |
| $Rn_2O$ | 0.000 | 0.000 | 0.000 | 0.000 | 0.000 | 0.000 | 0.000 |
| B+Nb | 6.946 | 6.946 | 6.946 | 6.946 | 6.946 | 6.946 | 6.946 |
| Zr+Nb+W+Zn | 16.34 | 16.34 | 30.77 | 30.77 | 25.96 | 23.56 | 25.96 |
| Ti+Zr | 19.47 | 19.47 | 19.47 | 19.47 | 19.47 | 19.47 | 19.47 |
| $\lambda_{70}$[nm] | 431 | 427 | 436 | 426 | 421 | 421 | 426 |
| $\lambda_5$[nm] | 370 | 367 | 373 | 366 | 362 | 360 | 366 |
| Refractive index ($n_d$) | 1.851 | 1.849 | 1.869 | 1.865 | 1.854 | 1.848 | 1.855 |
| Abbe number ($v_d$) | 32.5 | 32.6 | 31.0 | 31.9 | 32.7 | 33.1 | 32.7 |
| Acid resistance ($RA_{(P)}$) | 1 | 1 | 1 | 1 | 1 | 2 | 1 |
| Degree of abrasion (Aa) | 132 | 122 | 126 | 128 | 128 | 129 | 125 |

[Table 6]

| (Unit: mass%) | Example | | | Comparative Example | Comparative Example | Example | |
|---|---|---|---|---|---|---|---|
| | 36 | 37 | 38 | A | B | 39 | 40 |
| $SiO_2$ | 22.50 | 22.50 | 24.90 | 4.000 | 0.500 | 22.50 | 22.50 |
| $B_2O_3$ | | | | 40.000 | 14.000 | | 6.00 |
| $Al_2O_3$ | | | | | | 10.00 | 10.00 |
| $Y_2O_3$ | | | | 12.000 | | 4.24 | 4.25 |
| $La_2O_3$ | 20.06 | 20.06 | 20.06 | 35.950 | | 35.01 | 41.01 |
| $Gd_2O_3$ | | | | 2.000 | | 3.00 | |
| $TiO_2$ | 12.04 | 12.04 | 12.04 | | | 6.04 | 3.04 |
| $ZrO_2$ | 7.44 | 7.44 | 7.44 | | | 7.44 | 4.44 |
| $Nb_2O_5$ | 6.95 | 6.95 | 6.95 | | | | |
| $WO_3$ | | | | | | | |
| $ZnO$ | 21.20 | 26.01 | 23.60 | | | 11.58 | 8.58 |
| $MgO$ | | | | | 5.000 | | |
| $CaO$ | 9.62 | 4.81 | 4.81 | 2.000 | 3.500 | | |
| $SrO$ | | | | 3.000 | 18.000 | | |
| $BaO$ | | | | | 21.000 | | |
| $Li_2O$ | | | | 1.000 | 1.500 | | |
| $Na_2O$ | | | | | | | |
| $K_2O$ | | | | | | | |
| $P_2O_5$ | | | | | 33.000 | | |
| $TaO_5$ | | | | | 3.500 | | |
| $Sb_2O_3$ | 0.20 | 0.20 | 0.20 | 0.050 | | 0.20 | 0.20 |
| $SnO_2$ | | | | | | | |
| Total | 100.0 | 100.0 | 100.0 | 100.0 | 100.0 | 100.0 | 100.0 |
| B/Si | 0.000 | 0.000 | 0.000 | 0.000 | 28.000 | 0.000 | 0.267 |
| $Ln_2O_3$ | 20.060 | 20.060 | 20.060 | 49.950 | 0.000 | 42.251 | 45.250 |
| RO | 9.622 | 4.811 | 4.810 | 5.000 | 47.500 | 0.000 | 0.000 |
| $Rn_2O$ | 0.000 | 0.000 | 0.000 | 1.000 | 1.500 | 0.000 | 0.000 |
| B+Nb | 6.946 | 6.946 | 6.950 | 40.000 | 14.000 | 0.000 | 6.000 |
| Zr+Hb+W+Zn | 35.59 | 40.40 | 37.99 | 0.00 | 0.00 | 19.02 | 13.02 |
| Ti+Zr | 19.48 | 19.48 | 19.48 | 0.00 | 0.00 | 13.48 | 7.48 |
| $\lambda_{70}$[nm] | 427 | 421 | 421 | 324 | 346 | 399 | 384 |
| $\lambda_5$ [nn] | 367 | 360 | 362 | 262 | 322 | 352 | 342 |
| Refractive index ($n_d$) | 1.874 | 1.864 | 1.882 | 1.701 | 1.610 | 1.809 | 1.753 |
| Abbe number ($v_d$) | 31.2 | 30.9 | 30.4 | 56.0 | 62.8 | 39.4 | 45.1 |
| Acid resistance ($RA_{(P)}$) | 1 | 1 | 1 | 4 | 5 | 1 | 2 |

(continued)

| (Unit: mass%) | Example | | | Comparative Example | Comparative Example | Example | |
|---|---|---|---|---|---|---|---|
| | 36 | 37 | 38 | A | B | 39 | 40 |
| Degree of abrasion (Aa) | 121 | 123 | 121 | 70 | 272 | 51 | 46 |

[Table 7]

| (Unit: mass%) | Example | | |
|---|---|---|---|
| | 41 | 42 | 43 |
| $SiO_2$ | 22.50 | 22.50 | 22.50 |
| $B_2O_3$ | | | |
| $Al_2O_3$ | 10.00 | 10.00 | 10.00 |
| $Y_2O_3$ | 4.24 | 4.24 | 4.25 |
| $La_2O_3$ | 44.50 | 35.01 | 20.01 |
| $Gd_2O_3$ | | | 15.00 |
| $TiO_2$ | 5.54 | 6.04 | 9.04 |
| $ZrO_2$ | 4.44 | 7.44 | 7.44 |
| $Nb_2O_5$ | | | |
| $WO_3$ | | 3.00 | |
| ZnO | 8.58 | 11.58 | 11.58 |
| MgO | | | |
| CaO | | | |
| SrO | | | |
| BaO | | | |
| $Li_2O$ | | | |
| $Na_2O$ | | | |
| $K_2O$ | | | |
| $P_2O_5$ | | | |
| $TaO_5$ | | | |
| $Sb_2O_3$ | 0.20 | 0.20 | 0.20 |
| $SnO_2$ | | | |
| Total | 100.0 | 100.0 | 100.0 |
| B/Si | 0.000 | 0.000 | 0.000 |
| $Ln_2O_3$ | 48.750 | 39.251 | 39.250 |
| RO | 0.000 | 0.000 | 0.000 |
| $Rn_2O$ | 0.000 | 0.000 | 0.000 |
| B+Nb | 0.000 | 0.000 | 0.000 |
| Zr+Nb+W+Zn | 13.02 | 22.02 | 19.02 |
| Ti+Zr | 9.98 | 13.48 | 16.48 |

(continued)

| (Unit: mass%) | Example | | |
|---|---|---|---|
| | 41 | 42 | 43 |
| $\lambda_{70}$[nm] | 401 | 398 | 452 |
| $\lambda_5$[nm] | 350 | 358 | 374 |
| Refractive index ($n_d$) | 1.806 | 1.810 | 1.820 |
| Abbe number ($v_d$) | 40.5 | 38.5 | 36.8 |
| Acid resistance ($RA_{(P)}$) | 1 | 1 | 1 |
| Degree of abrasion (Aa) | 38 | 53 | 150 |

[Table 8]

| (Unit: mass%) | Example | | | | | | |
|---|---|---|---|---|---|---|---|
| | 43 | 44 | 45 | 46 | 47 | 48 | 49 |
| $SiO_2$ | 22.50 | 22.50 | 22.50 | 22.50 | 25.50 | 22.50 | 22.50 |
| $B_2O_3$ | | | | | | | |
| $Al_2O_3$ | 10.00 | 10.00 | 10.00 | 10.00 | 10.00 | 10.00 | 10.00 |
| $Y_2O_3$ | 4.24 | 7.24 | 4.24 | 4.24 | 4.24 | 4.24 | 4.24 |
| $La_2O_3$ | 38.01 | 35.01 | 35.01 | 35.01 | 35.01 | 38.01 | 38.01 |
| $Gd_2O_3$ | | | 3.00 | | | | |
| $TiO_2$ | 6.04 | 6.04 | 6.04 | 6.04 | 6.04 | 6.04 | 6.04 |
| $ZrO_2$ | 7.44 | 7.44 | 7.44 | 7.44 | 7.44 | 7.44 | 7.44 |
| $Nb_2O_5$ | | | | | | | |
| $WO_3$ | | | | 3.00 | | | |
| $ZnO$ | 11.58 | 11.58 | 11.58 | 11.58 | 11.58 | 11.58 | 11.58 |
| $MgO$ | | | | | | | |
| $CaO$ | | | | | | | |
| $SrO$ | | | | | | | |
| $BaO$ | | | | | | | |
| $Li_2O$ | | | | | | | |
| $Na_2O$ | | | | | | | |
| $K_2O$ | | | | | | | |
| $P_2O_5$ | | | | | | | |
| $TaO_5$ | | | | | | | |
| $Sb_2O_3$ | 0.20 | 0.20 | 0.20 | 0.20 | 0.20 | 0.20 | 0.20 |
| $SnO_2$ | | | | | | | |
| Total | 100.000 | 100.000 | 100.000 | 100.000 | 100.000 | 100.000 | 100.000 |
| B/Si | 0.000 | 0.000 | 0.000 | 0.000 | 0.000 | 0.000 | 0.000 |
| $Ln_2O_3$ | 42.251 | 42.251 | 42.251 | 39.251 | 39.251 | 42.251 | 42.251 |
| RO | 0.000 | 0.000 | 0.000 | 0.000 | 0.000 | 0.000 | 0.000 |

(continued)

| (Unit: mass%) | Example | | | | | | |
|---|---|---|---|---|---|---|---|
| | 43 | 44 | 45 | 46 | 47 | 48 | 49 |
| $Rn_2O$ | 0.000 | 0.000 | 0.000 | 0.000 | 0.000 | 0.000 | 0.000 |
| B+Nb | 0.000 | 0.000 | 0.000 | 0.000 | 0.000 | 0.000 | 0.000 |
| $\lambda_{70}$ [nm] | 442 | 451 | 442 | 445 | 430 | 2317 | 517 |
| $\lambda_5$ [nm] | 352 | 352 | 352 | 358 | 353 | 353 | 353 |
| Refractive index ($n_d$) | 1.810 | 1.810 | 1.809 | 1.810 | 1.788 | 1.810 | 1.810 |
| Abbe number ($v_d$) | 39.4 | 39.5 | 39.4 | 38.5 | 40.1 | 39.4 | 39.4 |
| Acid resistance ($RA_{(P)}$) | 1 | 1 | 1 | 1 | 1 | 1 | 1 |
| Degree of abrasion (Aa) | 55 | 51 | 51 | 53 | 52 | 53 | 48 |

[Table 9]

| (Unit: mass%) | Example | | | | | | |
|---|---|---|---|---|---|---|---|
| | 50 | 51 | 52 | 53 | 54 | 55 | 56 |
| $SiO_2$ | 22.50 | 22.50 | 22.50 | 22.54 | 22.54 | 22.50 | 22.45 |
| $B_2O_3$ | | | | | | | |
| $Al_2O_3$ | 10.00 | 10.00 | 10.00 | 10.02 | 10.02 | 10.00 | 9.98 |
| $Y_2O_3$ | 4.24 | 4.24 | 4.24 | 4.25 | 4.25 | 4.24 | 4.24 |
| $La_2O_3$ | 38.51 | 41.51 | 41.51 | 41.59 | 41.59 | 41.51 | 41.42 |
| $Gd_2O_3$ | | | | | | | |
| $TiO_2$ | 5.54 | 5.54 | 5.54 | 5.55 | 5.55 | 5.54 | 5.52 |
| $ZrO_2$ | 7.44 | 7.44 | 7.44 | 7.45 | 7.45 | 7.44 | 7.42 |
| $Nb_2O_5$ | | | | | | | |
| $WO_3$ | | | | | | | |
| ZnO | 11.58 | 8.58 | 8.58 | 8.60 | 8.60 | 8.58 | 8.56 |
| MgO | | | | | | | |
| CaO | | | | | | | |
| SrO | | | | | | | |
| BaO | | | | | | | |
| $Li_2O$ | | | | | | | |
| $Na_2O$ | | | | | | | |
| $K_2O$ | | | | | | | |
| $P_2O_5$ | | | | | | | |
| $TaO_5$ | | | I | | | | |
| $Sb_2O_3$ | 0.20 | 0.20 | 0.20 | | | | 0.20 |
| $SnO_2$ | | | | | | 0.20 | 0.20 |
| Total | 100.000 | 100.000 | 100.000 | 100.000 | 100.000 | 100.000 | 100.000 |
| B/Si | 0.000 | 0.000 | 0.000 | 0.000 | 0.000 | 0.000 | 0.000 |

(continued)

| (Unit: mass%) | Example | | | | | | |
|---|---|---|---|---|---|---|---|
| | 50 | 51 | 52 | 53 | 54 | 55 | 56 |
| $Ln_2O_3$ | 42.751 | 45.750 | 45.750 | 45.842 | 45.842 | 45.750 | 45.659 |
| RO | 0.000 | 0.000 | 0.000 | 0.000 | 0.000 | 0.000 | 0.000 |
| $Rn_2O$ | 0.000 | 0.000 | 0.000 | 0.000 | 0.000 | 0.000 | 0.000 |
| B+Nb | 0.000 | 0.000 | 0.000 | 0.000 | 0.000 | 0.000 | 0.000 |
| $\lambda_{70}$[nm] | 431 | 505 | 2317 | 472 | 454 | 481 | 447 |
| $\lambda_5$[nm] | 351 | 351 | 351 | 346 | 346 | 345 | 351 |
| Refractive index ($n_d$) | 1.808 | 1.811 | 1.810 | 1.810 | 1.809 | 1.810 | 1.810 |
| number ($v_d$) | 39.9 | 40.1 | 40.0 | 40.0 | 40.2 | 40.1 | 40.2 |
| Acid resistance ($RA_{(P)}$) | 1 | 1 | 1 | 1 | 1 | 1 | 1 |
| Degree of abrasion (Aa) | 47 | 47 | 44 | 42 | 43 | 40 | 42 |

[Table 10]

| (Unit: mass%) | Example | | | | | | |
|---|---|---|---|---|---|---|---|
| | 57 | 58 | 59 | 60 | 61 | 62 | 63 |
| $SiO_2$ | 22.32 | 22.32 | 22.52 | 22.50 | 22.50 | 22.50 | 22.50 |
| $B_2O_3$ | | | | | | | |
| $Al_2O_3$ | 9. 92 | 9.92 | 10.01 | 10.00 | 10.00 | 10.00 | 10.00 |
| $Y_2O_3$ | 4.21 | 4.21 | 4.25 | 4.24 | 4.25 | 4.24 | 4.24 |
| $La_2O_3$ | 41.18 | 41.18 | 41.55 | 44.50 | 44.01 | 41.51 | 41.51 |
| $Gd_2O_3$ | | | | | | | |
| $TiO_2$ | 5.49 | 5.49 | 5.54 | 5.54 | 6.04 | 5.54 | 5.54 |
| $ZrO_2$ | 7.38 | 7.38 | 7.45 | 4.44 | 4.44 | 7.44 | 7.44 |
| $Nb_2O_5$ | | | | | | | |
| $WO_3$ | | | | | | | |
| ZnO | 8.51 | 8.51 | 8.59 | 8.58 | 8.58 | 8.58 | 8.58 |
| MgO | | | | | | | |
| CaO | | | | | | | |
| SrO | | | | | | | |
| BaO | | | | | | | |
| $Li_2O$ | | | | | | | |
| $Na_2O$ | | | | | | | |
| $K_2O$ | | | | | | | |
| $P_2O_5$ | | | | | | | |
| $TaO_5$ | | | | | | | |
| $Sb_2O_3$ | 0.99 | 0.99 | 0.10 | 0.20 | 0.20 | 0.20 | 0.20 |
| $SnO_2$ | | | | | | | |

(continued)

| (Unit: mass%) | Example | | | | | | |
|---|---|---|---|---|---|---|---|
| | 57 | 58 | 59 | 60 | 61 | 62 | 63 |
| Total | 100.000 | 100.000 | 100.000 | 100.000 | 100.000 | 100.000 | 100.000 |
| B/Si | 0.000 | 0.000 | 0.000 | 0.000 | 0.000 | 0.000 | 0.000 |
| $Ln_2O_3$ | 45.387 | 45.387 | 45.796 | 48.750 | 48.250 | 45.750 | 45.750 |
| RO | 0.000 | 0.000 | 0.000 | 0.000 | 0.000 | 0.000 | 0.000 |
| $Rn_2O$ | 0.000 | 0.000 | 0.000 | 0.000 | 0.000 | 0.000 | 0.000 |
| B+Nb | 0.000 | 0.000 | 0.000 | 0.000 | 0.000 | 0.000 | 0.000 |
| $\lambda_{70}$[nm] | 447 | 498 | 449 | 506 | 475 | 443 | 470 |
| $\lambda_5$[nm] | 363.5 | 364 | 348 | 350 | 351 | 352 | 352 |
| Refractive index ($n_d$) | 1.811 | 1.810 | 1.810 | 1.806 | 1.808 | 1.809 | 1.809 |
| Abbe number ($v_d$) | 39.9 | 39.8 | 40.1 | 40.5 | 40.1 | 40.1 | 40.1 |
| Acid resistance ($RA_{(P)}$) | 1 | 1 | 1 | 1 | 1 | 1 | 1 |
| Degree of abrasion (Aa) | 42 | 39 | 40 | 38 | 39 | 42 | 44 |

[Table 11]

| (Unit: mass%) | Example | | | | | | |
|---|---|---|---|---|---|---|---|
| | 64 | 65 | 66 | 67 | 68 | 69 | 70 |
| $SiO_2$ | 22.50 | 22.50 | 22.50 | 22.50 | 22.50 | 22.50 | 25.50 |
| $B_2O_3$ | | 3.00 | | | 6.00 | 6.00 | 6.00 |
| $Al_2O_3$ | 10.00 | 10.00 | 10.00 | 10.00 | 10.00 | 10.00 | 7.00 |
| $Y_2O_3$ | 4.24 | 4.25 | 4.24 | 4.25 | 4.25 | 7.25 | 7.25 |
| $La_2O_3$ | 41.51 | 44.01 | 41.51 | 39.01 | 41.01 | 41.01 | 41.01 |
| $Gd_2O_3$ | | | | | | | |
| $TiO_2$ | 5.54 | 3.04 | 5.54 | 6.04 | 3.04 | 3.04 | 3.04 |
| $ZrO_2$ | 7.44 | 4.44 | 7.44 | 4.44 | 4.44 | 4.44 | 4.44 |
| $Nb_2O_5$ | | | | | | | |
| $WO_3$ | | | | | | | |
| ZnO | 8.58 | 8.58 | 8.58 | 13.58 | 8.58 | 5.58 | 5.58 |
| MgO | | | | | | | |
| CaO | | | | | | | |
| SrO | | | | | | | |
| BaO | | | | | | | |
| $Li_2O$ | | | | | | | |
| $Na_2O$ | | | | | | | |
| $K_2O$ | | | | | | | |
| $P_2O_5$ | | | | | | | |
| $TaO_5$ | | | | | | | |

(continued)

| (Unit: mass%) | Example | | | | | | |
|---|---|---|---|---|---|---|---|
| | 64 | 65 | 66 | 67 | 68 | 69 | 70 |
| $Sb_2O_3$ | | 0.20 | 0.20 | 0.20 | 0.20 | 0.20 | 0.20 |
| $SnO_2$ | 0.20 | | | | | | |
| Total | 100.000 | 100.000 | 100.000 | 100.000 | 100.000 | 100.000 | 100.000 |
| B/Si | 0.000 | 0.133 | 0.000 | 0.000 | 0.267 | 0.267 | 0.235 |
| $Ln_2O_3$ | 45.750 | 48.250 | 45.750 | 43.250 | 45.250 | 48.250 | 48.250 |
| RO | 0.000 | 0.000 | 0.000 | 0.000 | 0.000 | 0.000 | 0.000 |
| $Rn_2O$ | 0.000 | 0.000 | 0.000 | 0.000 | 0.000 | 0.000 | 0.000 |
| B+Nb | 0.000 | 3.000 | 0.000 | 0.000 | 6.000 | 6.000 | 6.000 |
| $\lambda_{70}$[nm] | 461 | 416 | 460 | 455 | 409 | 409 | 412 |
| $\lambda_5$[nm] | 345 | 342 | 353 | 354 | 342 | 342 | 343 |
| Refractive index ($n_d$) | 1.809 | 1.774 | 1.810 | 1.805 | 1.753 | 1.756 | 1.749 |
| Abbe number ($v_d$) | 40.1 | 44.1 | 40.1 | 39.7 | 45.1 | 45.3 | 45.6 |
| Acid resistance ($RA_{(P)}$) | 1 | 2 | 1 | 1 | 2 | 2 | 2 |
| Degree of abrasion (Aa) | 44 | 49 | 42 | 46 | 46 | 48 | 48 |

[Table 12]

| (Unit: mass%) | Example | | | | | | |
|---|---|---|---|---|---|---|---|
| | 71 | 72 | 73 | 74 | 75 | 76 | 77 |
| $SiO_2$ | 25.50 | 25.50 | 25.50 | 25.50 | 25.50 | 26.00 | 26.00 |
| $B_2O_3$ | 6.00 | 5.50 | 5.00 | 5.00 | 5.00 | 4.50 | 4.50 |
| $Al_2O_3$ | 7.00 | 7.00 | 7.00 | 7.00 | 7.00 | 7.00 | 7.00 |
| $Y_2O_3$ | 10.28 | 10.28 | 10.28 | 10.28 | 10.28 | 10.28 | 10.28 |
| $La_2O_3$ | 41.01 | 41.01 | 41.01 | 41.01 | 41.01 | 41.01 | 38.01 |
| $Gd_2O_3$ | | | | | | | |
| $TiO_2$ | | | | | | | |
| $ZrO_2$ | 4.44 | 4.44 | 4.44 | 4.44 | 4.44 | 4.44 | 4.44 |
| $Nb_2O_5$ | | | | | | | |
| $WO_3$ | | | | | | | |
| ZnO | 5.58 | 5.58 | 5.58 | 5.58 | 5.58 | 5.58 | 8.58 |
| MgO | | | | | | | |
| CaO | | | | 0.50 | | | |
| SrO | | | | | | | |
| BaO | | | | | 0.50 | | |
| $Li_2O$ | | 0.50 | 1.00 | 0.50 | 0.50 | 1.00 | 1.00 |
| $Na_2O$ | | | | | | | |
| $K_2O$ | | | | | | | |

(continued)

| (Unit: mass%) | Example | | | | | | |
|---|---|---|---|---|---|---|---|
| | 71 | 72 | 73 | 74 | 75 | 76 | 77 |
| $P_2O_5$ | | | | | | | |
| $TaO_5$ | | | | | | | |
| $Sb_2O_3$ | 0.20 | 0.20 | 0.20 | 0.20 | 0.20 | 0.20 | 0.20 |
| $SnO_2$ | | | | | | | |
| Total | 100.000 | 100.000 | 100.000 | 100.000 | 100.000 | 100.000 | 100.000 |
| B/Si | 0.235 | 0.216 | 0.196 | 0.196 | 0.196 | 0.173 | 0.173 |
| $Ln_2O_3$ | 51.286 | 51.286 | 51.286 | 51.286 | 51.286 | 51.286 | 48.286 |
| RO | 0.000 | 0.000 | 0.000 | 0.500 | 0.500 | 0.000 | 0.000 |
| $Rn_2O$ | 0.000 | 0.500 | 1.000 | 0.500 | 0.500 | 1.000 | 1.000 |
| B+Nb | 6.000 | 5.500 | 5.000 | 5.000 | 5.000 | 4.500 | 4.500 |
| $\lambda_{70}$[nm] | 379 | 381 | 379 | 380 | 381 | 379 | 379 |
| $\lambda_5$[nm] | 296 | 299 | 298 | 299 | 299 | 298 | 298 |
| Refractive index ($n_d$) | 1.736 | 1.737 | 1.738 | 1.740 | 1.739 | 1.739 | 1.736 |
| Abbe number ($v_d$) | 49.6 | 49.7 | 49.7 | 49.6 | 49.5 | 49.5 | 49.3 |
| Acid resistance ($RA_{(P)}$) | 3 | 2 | 2 | 2 | 2 | 2 | 2 |
| Degree of abrasion (Aa) | 49 | 50 | 51 | 50 | 52 | 52 | 50 |

[Table 13]

| (Unit: mass%) | Example | | | | | | |
|---|---|---|---|---|---|---|---|
| | 78 | 79 | 80 | 81 | 82 | 83 | 84 |
| $SiO_2$ | 26.00 | 15.60 | 24.16 | 26.00 | 24.16 | 25.50 | 25.50 |
| $B_2O_3$ | 4. 50 | 9.56 | | 4.50 | | **8.00** | 5.00 |
| $Al_2O_3$ | 7.00 | | | 4.00 | | 4. 00 | 7.00 |
| $Y_2O_3$ | 10.28 | 8.60 | 8.72 | 10.28 | 8.72 | 10.28 | 13.28 |
| $La_2O_3$ | 38.01 | 33.27 | 33.71 | 38.01 | 33.71 | 41.01 | 38.01 |
| $Gd_2O_3$ | | | | | | | |
| $TiO_2$ | | 5.07 | 5.13 | | 2.13 | | |
| $ZrO_2$ | 4.44 | 2.87 | 2.91 | 4.44 | 2.91 | 4.44 | 4.44 |
| $Nb_2O_5$ | | | | | | | |
| $WO_3$ | | | | | | | |
| ZnO | 9.58 | 25.00 | 25.34 | 12.58 | 28.34 | 5.58 | 5.58 |
| MgO | | | | | | | |
| CaO | | | | | | | |
| SrO | | | | | | | |
| BaO | | | | | | | |
| $Li_2O$ | | | | | | 1.00 | 1.00 |

(continued)

| (Unit: mass%) | Example | | | | | | |
|---|---|---|---|---|---|---|---|
| | 78 | 79 | 80 | 81 | 82 | 83 | 84 |
| $Na_2O$ | | | | | | | |
| $K_2O$ | | | | | | | |
| $P_2O_5$ | | | | | | | |
| $TaO_5$ | | | | | | | |
| $Sb_2O_3$ | 0.20 | 0.03 | 0.03 | 0.20 | 0.03 | 0.20 | 0.20 |
| $SnO_2$ | | | | | | | |
| Total | 100.000 | 100.000 | 100.000 | 100.000 | 100.000 | 100.000 | 100.000 |
| B/Si | 0.173 | 0.613 | 0.000 | 0.173 | 0.000 | 0.314 | 0.196 |
| $Ln_2O_3$ | 48.286 | 41.871 | 42.423 | 48.286 | 42.423 | 51.286 | 51.286 |
| RO | 0.000 | 0.000 | 0.000 | 0.000 | 0.000 | 0.000 | 0.000 |
| $Rn_2O$ | 0.000 | 0.000 | 0.000 | 0.000 | 0.000 | 1.000 | 1.000 |
| B+Nb | 4.500 | 9.556 | 0.000 | 4.500 | 0.000 | 8.000 | 5.000 |
| $\lambda_{70}$[nm] | 382 | 437 | 435 | 376 | 403 | 369 | 376 |
| $\lambda_5$[nm] | 299 | 346 | 345 | 292 | 333 | 289 | 296 |
| Refractive index ($n_d$) | 1.740 | 1.815 | 1.830 | 1.751 | 1.813 | 1.732 | 1.739 |
| Abbe number ($v_d$) | 49.1 | 40.0 | 39.0 | 48.4 | 41.6 | 50.2 | 49.6 |
| Acid res istance ($RA_{(P)}$) | 2 | 3 | 2 | 2 | 2 | 2 | 1 |
| Degree of abrasion (Aa) | 53 | 112 | 120 | 54 | 117 | 56 | 54 |

[Table 14]

| (Unit: mass%) | Example | | | | | | |
|---|---|---|---|---|---|---|---|
| | 85 | 86 | 87 | 88 | 89 | 90 | 91 |
| $SiO_2$ | 25.50 | 25.50 | 25.50 | 25.50 | 25.50 | 25.50 | 25.50 |
| $B_2O_3$ | 5.00 | 5.00 | 5.00 | 5.00 | 5.00 | 5.00 | 5.00 |
| $Al_2O_3$ | 7.00 | 7.00 | 7.00 | 7.00 | 7.00 | 7.00 | 7.00 |
| $Y_2O_3$ | 7.28 | 16.28 | 19.28 | 16.28 | 22.28 | 19.28 | 25.28 |
| $La_2O_3$ | 44.01 | 35.01 | 32.01 | 37.01 | 29.01 | 34.01 | 26.01 |
| $Gd_2O_3$ | | | | | | | |
| $TiO_2$ | | | | | | | |
| $ZrO_2$ | 4.44 | 4.44 | 4.44 | 2.44 | 4.44 | 2.44 | 4.44 |
| $Nb_2O_5$ | | | | | | | |
| $WO_3$ | | | | | | | |
| ZnO | 5.58 | 5.58 | 5.58 | 5.58 | 5.58 | 5.58 | 5.58 |
| MgO | | | | | | | |
| CaO | | | | | | | |
| SrO | | | | | | | |

(continued)

| (Unit: mass%) | Example | | | | | | |
|---|---|---|---|---|---|---|---|
| | 85 | 86 | 87 | 88 | 89 | 90 | 91 |
| BaO | | | | | | | |
| $Li_2O$ | 1.00 | 1.00 | 1.00 | 1.00 | 1.00 | 1.00 | 1.00 |
| $Na_2O$ | | | | | | | |
| $K_2O$ | | | | | | | |
| $P_2O_5$ | | | | | | | |
| $TaO_5$ | | | | | | | |
| $Sb_2O_3$ | 0.20 | 0.20 | 0.20 | 0.20 | 0.20 | 0.20 | 0.20 |
| $SnO_2$ | | | | | | | |
| Total | 100.000 | 100.000 | 100.000 | 100.000 | 100.000 | 100.000 | 100.000 |
| B/Si | 0.196 | 0.196 | 0.196 | 0.196 | 0.196 | 0.196 | 0.196 |
| $Ln_2O_3$ | 51.286 | 51.286 | 51.286 | 53.286 | 51.286 | 53.286 | 51.286 |
| RO | 0.000 | 0.000 | 0.000 | 0.000 | 0.000 | 0.000 | 0.000 |
| $Rn_2O$ | 1.000 | 1.000 | 1.000 | 1.000 | 1.000 | 1.000 | 1.000 |
| B+Nb | 5.000 | 5.000 | 5.000 | 5.000 | 5.000 | 5.000 | 5.000 |
| $\lambda_{70}$[nm] | 376 | 378 | 379 | 377 | 379 | 377 | 379 |
| $\lambda_5$[nm] | 297 | 296 | 297 | 297 | 297 | 297 | 297 |
| Refractive index ($n_d$) | 1.739 | 1.739 | 1.739 | 1.737 | 1.740 | 1.738 | 1.740 |
| Abbe number ($v_d$) | 49.5 | 49.6 | 49.7 | 50.1 | 49.7 | 50.0 | 49.8 |
| Acid resistance ($RA_{(P)}$) | 1 | 2 | 2 | 2 | 2 | 2 | 2 |
| Degree of abrasion (Aa) | 48 | 49 | 51 | 48 | 52 | 51 | 50 |

[Table 15]

| (Unit: mass%) | Example | | | | | | |
|---|---|---|---|---|---|---|---|
| | 92 | 93 | 94 | 95 | 96 | 97 | 98 |
| $SiO_2$ | 26.28 | 24.75 | 24.75 | 24.75 | 24.75 | 25.50 | 24.75 |
| $B_2O_3$ | 5.15 | 4.85 | 4.85 | 4.85 | 4.85 | 5.00 | 4.85 |
| $Al_2O_3$ | 4.12 | 6.80 | 6.80 | 6.80 | 6.80 | 7.00 | 6.80 |
| $Y_2O_3$ | 26.06 | 18.72 | 18.72 | 18.72 | 18.72 | 19.28 | 18.72 |
| $La_2O_3$ | 26.81 | 31.07 | 31.07 | 31.07 | 31.07 | 32.01 | 31.07 |
| $Gd_2O_3$ | | | | | | | 2.91 |
| $TiO_2$ | | | | | | | |
| $ZrO_2$ | 4.58 | 4.31 | 4.31 | 4.31 | 4.31 | 2.44 | 4.31 |
| $Nb_2O_5$ | | | | | | | |
| $WO_3$ | | | | | | | |
| ZnO | 5.75 | 5.42 | 5.42 | 5.42 | 5.42 | 7.58 | 5.42 |
| MgO | | 2.91 | | | | | |

(continued)

| (Unit: mass%) | Example | | | | | | |
|---|---|---|---|---|---|---|---|
| | 92 | 93 | 94 | 95 | 96 | 97 | 98 |
| CaO | | | 2.91 | | | | |
| SrO | | | | 2.91 | | | |
| BaO | | | | | 2.91 | | |
| $Li_2O$ | 1.03 | 0.97 | 0.97 | 0.97 | 0.97 | 1.00 | 0.97 |
| $Na_2O$ | | | | | | | |
| $K_2O$ | | | | | | | |
| $P_2O_5$ | | | | | | | |
| $TaO_5$ | | | | | | | |
| $Sb_2O_3$ | 0.21 | 0.19 | 0.19 | 0.19 | 0.19 | 0.20 | 0.19 |
| $SnO_2$ | | | | | | | |
| Total | 100.000 | 100.000 | 100.000 | 100.000 | 100.000 | 100.000 | 100.000 |
| B/Si | 0.196 | 0.196 | 0.196 | 0.196 | 0.196 | 0.196 | 0.196 |
| $Ln_7O_3$ | 52.872 | 49.792 | 49.792 | 49.792 | 49. 792 | 51.286 | 52.705 |
| RO | 0.000 | 2.913 | 2.913 | 2.913 | 2.913 | 0.000 | 0.000 |
| $Rn_2O$ | 1.031 | 0.971 | 0.971 | 0.971 | 0.971 | 1.000 | 0.971 |
| B+Nb | 5.155 | 4.854 | 4.854 | 4.854 | 4.854 | 5.000 | 4.854 |
| $\lambda_{70}$[nm] | 379 | 382 | 377 | 376 | 379 | 377 | 375 |
| $\lambda_5$[nm] | 297 | 297 | 296 | 295 | 296 | 294 | 294 |
| Refractive index ($n_d$) | 1.742 | 1.740 | 1.740 | 1.736 | 1.745 | 1.732 | 1.732 |
| Abbe number ($v_d$) | 49.8 | 49.5 | 49.6 | 50.0 | 49.6 | 50.4 | 50.4 |
| Acid resistance ($RA_{(P)}$) | 1 | 1 | 1 | 2 | 1 | 2 | 2 |
| Degree of abrasion (Aa) | 52 | 54 | 53 | 53 | 52 | 55 | 51 |

[Table 16]

| (Unit: mass%) | Example | | | | | | |
|---|---|---|---|---|---|---|---|
| | 99 | 100 | 101 | 102 | 103 | 104 | 105 |
| $SiO_2$ | 25.50 | 25.50 | 24.28 | 25.50 | 23.18 | 23.18 | 25.50 |
| $B_2O_3$ | 5.00 | 5.00 | 4.76 | 5.00 | 4.55 | 4.55 | 9.50 |
| $Al_2O_3$ | 7.00 | 7.00 | 6.67 | 7.00 | 6.36 | 6.36 | 7.00 |
| $Y_2O_3$ | 19.28 | 22.28 | 18.36 | 19.28 | 17.53 | 17.53 | 19.28 |
| $La_2O_3$ | 32.01 | 29.01 | 30.48 | 32.01 | 29.10 | 29.10 | 32.01 |
| $Gd_2O_3$ | | | 4.76 | | | | |
| $TiO_2$ | | | | | | | |
| $ZrO_2$ | | | | | | | |
| $Nb_2O_5$ | | | | | | | |
| $WO_3$ | | | | | | | |

(continued)

| (Unit: mass%) | Example | | | | | | |
|---|---|---|---|---|---|---|---|
| | 99 | 100 | 101 | 102 | 103 | 104 | 105 |
| ZnO | 10.02 | 10.02 | 9.54 | 10.02 | 9.11 | 9.11 | 5.52 |
| MgO | | | | | 9.09 | | |
| CaO | | | | | | | |
| SrO | | | | | | | |
| BaO | | | | | | 9.09 | |
| $Li_2O$ | 1.00 | 1.00 | 0.95 | | 0.91 | 0.91 | 1.00 |
| $Na_2O$ | | | | 1.00 | | | |
| $K_2O$ | | | | | | | |
| $P_2O_5$ | | | | | | | |
| $TaO_5$ | | | | | | | |
| $Sb_2O_3$ | 0.20 | 0.20 | 0.19 | 0.20 | 0.18 | 0.18 | 0.20 |
| $SnO_2$ | | | | | | | |
| Total | 100.000 | 100.000 | 100.000 | 100.000 | 100.000 | 100.000 | 100.000 |
| B/Si | 0.196 | 0.196 | 0.196 | 0.196 | 0.196 | 0.196 | 0.373 |
| $Ln_2O_3$ | 51.286 | 51.286 | 53.606 | 51.286 | 46.624 | 46.624 | 51.286 |
| RO | 0.000 | 0.000 | 0.000 | 0.000 | 9.091 | 9.091 | 0.000 |
| $Rn_2O$ | 1.000 | 1.000 | 0.952 | 1.000 | 0.909 | 0.909 | 1.000 |
| B+Nb | 5.000 | 5.000 | 4.762 | 5.000 | 4.545 | 4.545 | 9.500 |
| $\lambda_{70}$[nm] | 371 | 379 | 379 | 379 | 370 | 370 | 370 |
| $\lambda_5$[nm] | 288 | 295 | 296 | 294 | 227 | 227 | 227 |
| Refractive index ($n_d$) | 1.738 | 1.741 | 1.726 | 1.736 | 1.706 | 1.706 | 1.708 |
| Abbe number ($v_d$) | 50.2 | 50.0 | 50.1 | 49.9 | 52.2 | 51.9 | 52.3 |
| Acid resistance ($RA_{(P)}$) | 2 | 1 | 1 | 2 | 2 | 2 | 2 |
| Degree of abrasion (Aa) | 52 | 53 | 52 | 54 | 55 | 55 | 51 |

[Table 17]

| (Unit: mass%) | Example | Comparative Example | Example | | | | |
|---|---|---|---|---|---|---|---|
| | 106 | A | 107 | 108 | 109 | 110 | 111 |
| $SiO_2$ | 31.50 | 4.000 | 25.50 | 25.50 | 25.50 | 25.50 | 25.50 |
| $B_2O_3$ | 6.50 | 40.000 | 9.50 | 9.50 | 9.50 | 9.50 | 9.50 |
| $Al_2O_3$ | 7.00 | | 10.00 | 12.00 | 12.52 | 7.00 | 12.52 |
| $Y_2O_3$ | 19.28 | 12.000 | 19.28 | 19.28 | 19.28 | 19.28 | 19.28 |
| $La_2O_3$ | 29.01 | 35.950 | 32.01 | 32.01 | 32.01 | 45.01 | 42.01 |
| $Gd_2O_3$ | | 2.000 | | | | | |
| $TiO_2$ | | | | | | | |
| $ZrO_2$ | | | | | | | |

(continued)

| (Unit: mass%) | Example | Comparative Example | Example | | | | |
|---|---|---|---|---|---|---|---|
| | 106 | A | 107 | 108 | 109 | 110 | 111 |
| $Nb_2O_5$ | | | | | | | |
| $WO_3$ | | | | | | | |
| ZnO | 5.52 | | 2.52 | 0.52 | | 2.52 | |
| MgO | | | | | | | |
| CaO | | 2.000 | | | | | |
| SrO | | 3.000 | | | | | |
| BaO | | | | | | | |
| $Li_2O$ | 1.00 | 1.000 | 1.00 | 1.00 | 1.00 | 1.00 | 1.00 |
| $Na_2O$ | | | | | | | |
| $K_2O$ | | | | | | | |
| $P_2O_5$ | | | | | | | |
| $TaO_5$ | | | | | | | |
| $Sb_2O_3$ | 0.20 | 0.050 | 0.20 | 0.20 | 0.20 | 0.20 | 0.20 |
| $SnO_2$ | | | | | | | |
| Total | 100.000 | 100.000 | 100.000 | 100.000 | 100.000 | 110.000 | 110.000 |
| B/Si | 0.206 | 10.000 | 0.373 | 0.373 | 0.373 | 0.373 | 0.373 |
| $Ln_2O_3$ | 48.286 | 49.950 | 51.286 | 51.286 | 51.286 | 64.286 | 61.286 |
| RO | 0.000 | 5.000 | 0.000 | 0.000 | 0.000 | 0.000 | 0.000 |
| $Rn_2O$ | 1.000 | 1.000 | 1.000 | 1.000 | 1.000 | 1.000 | 1.000 |
| B+Nb | 6.500 | 40.000 | 9.500 | 9.500 | 9.500 | 9.500 | 9.500 |
| $\lambda_{70}$[nm] | 370 | 348 | 373 | 375 | 375 | 374 | 379 |
| $\lambda_5$[nm] | 292 | 262 | 297 | 301 | 301 | 293 | 302 |
| Refractive index ($n_d$) | 1.721 | 1.701 | 1.696 | 1.690 | 1.688 | 1.733 | 1.712 |
| Abbe number ($v_d$) | 51.7 | 56.0 | 52. 7 | 53.1 | 53.1 | 51.4 | 52.2 |
| Acid resistance ($RA_{(P)}$) | 2 | 4 | 2 | 2 | 2 | 2 | 2 |
| Degree of abrasion (Aa) | 53 | 70 | 53 | 52 | 49 | 50 | 52 |

[Table 18]

| (Unit: mass%) | Example | | | | | | |
|---|---|---|---|---|---|---|---|
| | 112 | 113 | 114 | 115 | 116 | 117 | 118 |
| $SiO_2$ | 25.50 | 24.50 | 22.21 | 25.50 | 25.50 | 17.50 | 17.50 |
| $B_2O_3$ | 9.50 | 9.50 | 12.63 | 9.50 | 10.50 | 5.00 | 5.00 |
| $Al_2O_3$ | 9.52 | 9.52 | 10.90 | 8.52 | 9.52 | 10.00 | 10.00 |
| $Y_2O_3$ | 19.28 | 19.28 | 16.80 | 19.28 | 19.28 | 4.25 | 9.25 |
| $La_2O_3$ | 35.01 | 35.01 | 36.59 | 35.01 | 35.01 | 44.51 | 39.51 |
| $Gd_2O_3$ | | | | | | | |

(continued)

| (Unit: mass%) | Example | | | | | | |
|---|---|---|---|---|---|---|---|
| | 112 | 113 | 114 | 115 | 116 | 117 | 118 |
| TiO$_2$ | | | | | | 5.54 | 5.54 |
| ZrO$_2$ | | | | | | 4.44 | 4.44 |
| Nb$_2$O$_5$ | | | | | | | |
| WO$_3$ | | | | | | | |
| ZnO | | | | | | 8.58 | 8.58 |
| MgO | | | | | | | |
| CaO | | | | | | | |
| SrO | | | | | | | |
| BaO | | | | | | | |
| Li$_2$O | 1.00 | 2.00 | 0.87 | 2.00 | | | |
| Na$_2$O | | | | | | | |
| K$_2$O | | | | | | | |
| P$_2$O$_5$ | | | | | | | |
| TaO$_5$ | | | | | | | |
| Sb$_2$O$_3$ | 0.20 | 0.20 | | 0.20 | 0.20 | 0.20 | 0.20 |
| SnO$_2$ | | | | | | | |
| Total | 100.000 | 100.000 | 100.000 | 100.000 | 100.000 | 100.000 | 100.000 |
| B/Si | 0.373 | 0.388 | 0.569 | 0.373 | 0.412 | 0.286 | 0.286 |
| Nn$_2$O$_3$ | 54.286 | 54.286 | 53.385 | 54.286 | 54.286 | 48.750 | 48.750 |
| RO | 0.000 | 0.000 | 0.000 | 0.000 | 0.000 | 0.000 | 0.000 |
| Rn$_2$O | 1.000 | 2.000 | 0.871 | 2.000 | 0.000 | 0.000 | 0.000 |
| B+Nb | 9.500 | 9.500 | 12.631 | 9.500 | 10.500 | 5.000 | 5.000 |
| $\lambda_{70}$[nm] | 374 | 374 | 398 | 397 | 398 | 448 | 451 |
| $\lambda_5$|nm] | 297 | 297 | 306 | 301 | 303 | 351 | 352 |
| Refractive index (n$_d$) | 1.700 | 1.702 | 1.696 | 1.699 | 1.696 | 1.806 | 1.806 |
| Abbe number ($v_d$) | 52.8 | 52.6 | 53.2 | 52.6 | 52.7 | 40.8 | 40.9 |
| Acid resistance (RA$_{(P)}$) | 2 | 2 | 2 | 2 | 2 | 2 | 2 |
| Degree of abrasion (Aa) | 52 | 52 | 53 | 52 | 52 | 50 | 49 |

[Table 19]

| (Unit: mass%) | Example | | | | | | |
|---|---|---|---|---|---|---|---|
| | 119 | 120 | 121 | 122 | 123 | 124 | 125 |
| SiO$_2$ | 22.50 | 22.50 | 19.50 | 16.50 | 16.50 | 22.21 | 26.21 |
| B$_2$O$_3$ | 8.00 | 5.00 | 11.00 | 14.00 | 8.00 | 12.50 | 4.50 |
| Al$_2$O$_3$ | 7.00 | 10.00 | 7.00 | 7.00 | 13.00 | 10.90 | 14.90 |
| Y$_2$O$_3$ | 16.28 | 16.28 | 16.28 | 16.28 | 16.28 | 16.80 | 16.80 |

(continued)

| (Unit: mass%) | Example | | | | | | |
|---|---|---|---|---|---|---|---|
| | 119 | 120 | 121 | 122 | 123 | 124 | 125 |
| La$_2$O$_3$ | 35.01 | 35.01 | 35.01 | 35.01 | 35.01 | 36.59 | 36.59 |
| Gd$_2$O$_3$ | | | | | | | |
| TiO$_2$ | | | | | | | |
| ZrO$_2$ | 4.44 | 4.44 | 4.44 | 4.44 | 4.44 | | |
| Nb$_2$O$_5$ | | | | | | | |
| WO$_3$ | | | | | | | |
| ZnO | 5.58 | 5.58 | 5.58 | 5.58 | 5.58 | | |
| MgO | | | | | | | |
| CaO | | | | | | | |
| SrO | | | | | | | |
| BaO | | | | | | | |
| Li$_2$O | 1.00 | 1.00 | 1.00 | 1.00 | 1.00 | 1.00 | 1.00 |
| Na$_2$O | | | | | | | |
| K$_2$O | | | | | | | |
| P$_2$O$_5$ | | | | | | | |
| TaO$_5$ | | | | | | | |
| Sb$_2$O$_3$ | 0.20 | 0.20 | 0.20 | 0.20 | 0.20 | 0.10 | 0.10 |
| SnO$_2$ | | | | | | | |
| Total | 100.000 | 100.000 | 100.000 | 100.000 | 100.000 | 100.100 | 100.100 |
| B/Si | 0.356 | 0.222 | 0.564 | 0.849 | 0.485 | 0.563 | 0.172 |
| Ln$_2$O$_3$ | 51.286 | 51.286 | 51.286 | 51.286 | 51.286 | 53.385 | 53.385 |
| RO | 0.000 | 0.000 | 0.000 | 0.000 | 0.000 | 0.000 | 0.000 |
| Rn$_2$O | 1.000 | 1.000 | 1.000 | 1.000 | 1.000 | 1.000 | 1.000 |
| B+Nb | 8.000 | 5.000 | 11.000 | 14.000 | 8.000 | 12.502 | 4.502 |
| $\lambda_{70}$[nm] | 376 | 387 | 384 | 385 | 392 | 380 | 394 |
| $\lambda_5$[nm] | 296 | 307 | 310 | 310 | 317 | 310 | 317 |
| Refractive index (n$_d$) | 1.739 | 1.745 | 1.730 | 1.732 | 1.749 | 1.692 | 1.699 |
| Abbe number ($v_d$) | 49.9 | 49.3 | 49.9 | 49.9 | 49.2 | 53.3 | 52.2 |
| Acid resistance (RA$_{(P)}$) | 2 | 2 | 2 | 3 | 2 | 2 | 2 |
| Degree of abrasion (Aa) | 49 | 50 | 48 | 48 | 50 | 52 | 51 |

[Table 20]

| (Unit: mass%) | Example | | | | | | |
|---|---|---|---|---|---|---|---|
| | 126 | 127 | 128 | 129 | 130 | 131 | 132 |
| SiO$_2$ | 16.50 | 16.50 | 23.21 | 22.21 | 13.50 | 16.50 | 22.21 |
| B$_2$O$_3$ | 8.00 | 8.00 | 7.50 | 12.50 | 8.00 | 5.00 | 12.63 |

(continued)

| (Unit: mass%) | Example | | | | | | |
|---|---|---|---|---|---|---|---|
| | 126 | 127 | 128 | 129 | 130 | 131 | 132 |
| $Al_2O_3$ | 13.00 | 13.00 | 14.90 | 10.90 | 16.00 | 16.00 | 10.90 |
| $Y_2O_3$ | 13.28 | 19.28 | 16.80 | 16.80 | 16.28 | 16.28 | 16.80 |
| $La_2O_3$ | 38.01 | 32.01 | 36.59 | 36.59 | 35.01 | 35.01 | 36.59 |
| $Gd_2O_3$ | | | | | | | |
| $TiO_2$ | | | | | | | |
| $ZrO_2$ | 4.44 | 4.44 | | | 4.44 | 4.44 | |
| $Nb_2O_5$ | | | | | | | |
| $WO_3$ | | | | | | | |
| ZnO | 5.58 | 5.58 | | | 5.58 | 5.58 | |
| MgO | | | | | | | |
| CaO | | | | | | | |
| SrO | | | | | | | |
| BaO | | | | | | | |
| $Li_2O$ | 1.00 | 1.00 | 1.00 | 1.00 | 1.00 | 1.00 | 0.87 |
| $Na_2O$ | | | | | | | |
| $K_2O$ | | | | | | | |
| $P_2O_5$ | | | | | | | |
| $TaO_5$ | | | | | | | |
| $Sb_2O_3$ | 0.20 | 0.20 | | 0.20 | 0.20 | 0.20 | |
| $SnO_2$ | | | | | | | |
| Total | 100.000 | 100.000 | 100.000 | 100.200 | 100.000 | 100.000 | 100.001 |
| B/Si | 0.485 | 0.485 | 0.323 | 0.563 | 0.593 | 0.303 | 0.569 |
| $Ln_2O_3$ | 51.286 | 51.286 | 53.385 | 53.385 | 51.286 | 51.286 | 53.385 |
| RO | 0.000 | 0.000 | 0.000 | 0.000 | 0.000 | 0.000 | 0.000 |
| $Rn_2O$ | 1.000 | 1.000 | 1.000 | 1.000 | 1.000 | 1.000 | 0.872 |
| B+Nb | 8.000 | 8.000 | 7.502 | 12.502 | 8.000 | 5.000 | 12.631 |
| $\lambda_{70}$[nm] | 390 | 396 | 387 | 381 | 399 | 402 | 383 |
| $\lambda_5$[nm] | 317 | 318 | 314 | 310 | 323 | 324 | 311 |
| Refractive index ($n_d$) | 1.747 | 1.748 | 1.703 | 1.697 | 1.755 | 1.756 | 1.696 |
| Abbe number ($v_d$) | 48.6 | 49.0 | 52.6 | 53.0 | 48.6 | 48.3 | 53.1 |
| Acid resistance ($RA_{(P)}$) | 2 | 2 | 2 | 2 | 2 | 12 | 2 |
| Degree of abrasion (Aa) | 52 | 52 | 49 | 51 | 48 | 48 | 49 |

[Table 21]

| (Unit: mass%) | Example | | | | | | |
|---|---|---|---|---|---|---|---|
| | 133 | 134 | 135 | 136 | 137 | 138 | 139 |
| $SiO_2$ | 22.21 | 23.21 | 22.21 | 23.21 | 23.21 | 21.77 | 22.21 |
| $B_2O_3$ | 12.63 | 12.63 | 12.63 | 12.63 | 12.63 | 12.38 | 12.63 |
| $Al_2O_3$ | 9.90 | 8.90 | 10.90 | 8.90 | 8.90 | 10.69 | 10.90 |
| $Y_2O_3$ | 16.80 | 16.80 | 16.80 | 17.80 | 15.80 | 16.47 | 16.80 |
| $La_2O_3$ | 37.59 | 37.59 | 36.59 | 36.59 | 38.59 | 36.85 | 37.09 |
| $Gd_2O_3$ | | | | | | | |
| $TiO_2$ | | | | | | | |
| $ZrO_2$ | | | | | | | |
| $Nb_2O_5$ | | | | | | | |
| $WO_3$ | | | | | | | |
| ZnO | | | 1.00 | | | 0.98 | 0.50 |
| MgO | | | | | | | |
| CaO | | | | | | | |
| SrO | | | | | | | |
| BaO | | | | | | | |
| $Li_2O$ | 0.87 | 0.87 | 0.87 | 0.87 | 0.87 | 0.85 | 0.87 |
| $Na_2O$ | | | | | | | |
| $K_2O$ | | | | | | | |
| $P_9O_5$ | | | | | | | |
| $TaO_5$ | | | | | | | |
| $Sb_2O_3$ | | | | | | | |
| $SnO_2$ | | | | | | | |
| Total | 100.001 | 100.001 | 101.001 | 100.001 | 100.001 | 100.000 | 101.001 |
| B/Si | 0.569 | 0.544 | 0.569 | 0.544 | 0.544 | 0.569 | 0.569 |
| $Ln_2O_3$ | 54.385 | 54.385 | 53.385 | 54.385 | 54.385 | 53.318 | 53.885 |
| RO | 0.000 | 0.000 | 0.000 | 0.000 | 0.000 | 0.000 | 0.000 |
| $Rn_2O$ | 0.872 | 0.872 | 0.872 | 0.872 | 0.872 | 0.855 | 0.872 |
| B+Nb | 12.631 | 12.631 | 12.631 | 12.631 | 12.631 | 12.383 | 12.631 |
| $\lambda_{70}$[nm] | 382 | 380 | 383 | 380 | 380 | 383 | 383 |
| $\lambda_5$[nm] | 309 | 307 | 311 | 307 | 308 | 311 | 312 |
| Refractive index ($n_d$) | 1.700 | 1.698 | 1.701 | 1.699 | 1.699 | 1.704 | 1.702 |
| Abbe number ($v_d$) | 53.0 | 53.0 | 52.9 | 53.0 | 53.0 | 52.6 | 52.7 |
| Acid resistance ($RA_{(P)}$) | 2 | 2 | 2 | 2 | 2 | 2 | 2 |
| Degree of abrasion (Aa) | 51 | 52 | 52 | 51 | 50 | 51 | 49 |

[Table 22]

| (Unit: mass%) | Example | | | | | | |
|---|---|---|---|---|---|---|---|
| | 140 | 141 | 142 | 143 | 144 | 145 | 146 |
| SiO$_2$ | 23.21 | 21.88 | 22.16 | 22.16 | 23.16 | 22.16 | 22.16 |
| B$_2$O$_3$ | 12.63 | 12.44 | 12.61 | 12.61 | 11.61 | 12.61 | 12.61 |
| Al$_2$O$_3$ | 8.90 | 10.74 | 10.88 | 10.88 | 10.88 | 10.88 | 10.88 |
| Y$_2$O$_3$ | 14.80 | 16.55 | 17.76 | 15.76 | 16.76 | 18.76 | 19.76 |
| La$_2$O$_3$ | 39.59 | 36.05 | 35.52 | 37.51 | 36.52 | 34.52 | 33.52 |
| Gd$_2$O$_3$ | | | | | | | |
| TiO$_2$ | | | | | | | |
| ZrO$_2$ | | | | | | | |
| Nb$_2$O$_5$ | | | | | | | |
| WO$_3$ | | | | | | | |
| ZnO | | 0.99 | | | | | |
| MgO | | | | | | | |
| CaO | | 0.49 | | | | | |
| SrO | | | | | | | |
| BaO | | | | | | | |
| Li$_2$O | 0.87 | 0.86 | 0.87 | 0.87 | 0.87 | 0.87 | 0.87 |
| Na$_2$O | | | | | | | |
| K$_2$O | | | | | | | |
| P$_2$O$_5$ | | | | | | | |
| TaO$_5$ | | | | | | | |
| Sb$_2$O$_3$ | | | 0.20 | 0.20 | 0.20 | 0.20 | 0.20 |
| SnO$_2$ | | | | | | | |
| Total | 100.001 | 100.000 | 100.000 | 100.000 | 100.000 | 100.000 | 100.000 |
| B/Si | 0.544 | 0.569 | 0.569 | 0.569 | 0.501 | 0.569 | 0.569 |
| Ln$_2$O$_3$ | 54.385 | 52.596 | 53.278 | 53.278 | 53.278 | 53.278 | 53.278 |
| RO | 0.000 | 0.493 | 0.000 | 0.000 | 0.000 | 0.000 | 0.000 |
| Rn$_2$O | 0.872 | 0.859 | 0.870 | 0.870 | 0.870 | 0.870 | 0.870 |
| B+Nb | 12.631 | 12.444 | 12.606 | 12.606 | 11.608 | 12.606 | 12.606 |
| λ$_{70}$[nm] | 380 | 383 | 383 | 383 | 383 | 383 | 383 |
| λ$_5$[nm] | 308 | 311 | 311 | 312 | 312 | 311 | 311 |
| Refractive index (n$_d$) | 1.699 | 1.699 | 1.696 | 1.696 | 1.696 | 1.696 | 1.697 |
| Abbe number ($v_d$) | 53.1 | 53.0 | 53.0 | 53.1 | 53.0 | 53.2 | 53.2 |
| Acid resistance (RA$_{(P)}$) | 2 | 2 | 2 | 2 | 2 | 2 | 2 |
| Degree of abrasion (Aa) | 50 | 51 | 52 | 52 | 49 | 50 | 51 |

[Table 23]

| (Unit: mass%) | Example | | | | | | |
|---|---|---|---|---|---|---|---|
| | 147 | 148 | 149 | 150 | 151 | 152 | 153 |
| $SiO_2$ | 23.16 | 16.50 | 21.21 | 21.21 | 21.21 | 23.71 | 24.21 |
| $B_2O_3$ | 11.61 | 8.00 | 11.50 | 11.50 | 11.50 | 7.50 | 5.50 |
| $Al_2O_3$ | 10.88 | 13.00 | 9.90 | 9.90 | 9.90 | 14.90 | 15.90 |
| $Y_2O_3$ | 16.76 | 6.28 | 15.80 | 15.80 | 15.80 | 16.80 | 16.80 |
| $La_2O_3$ | 36.52 | 35.01 | 35.59 | 35.59 | 35.59 | 36.59 | 36.59 |
| $Gd_2O_3$ | | 10.00 | | | | | |
| $TiO_2$ | | | | | | | |
| $ZrO_2$ | | 4.44 | | | | | |
| $Nb_2O_5$ | | | | | | | |
| $WO_3$ | | | | | | | |
| ZnO | | 5.58 | | | | | |
| MgO | | | | | | | |
| CaO | | | 5.00 | | | | |
| SrO | | | | | 5.00 | | |
| BaO | | | | 5.00 | | | |
| $Li_2O$ | 0.87 | 1.00 | 1.00 | 1.00 | 1.00 | 0.50 | 1.00 |
| $Na_2O$ | | | | | | | |
| $K_2O$ | | | | | | | |
| $P_2O_5$ | | | | | | | |
| $TaO_5$ | | | | | | | |
| $Sb_2O_3$ | 0.20 | 0.20 | | | | | |
| $SnO_2$ | | | | | | | |
| Total | 100.000 | 100.000 | 100.000 | 100.000 | 100.000 | 100.000 | 100.000 |
| B/Si | 0.501 | 0.485 | 0.542 | 0.542 | 0.542 | 0.316 | 0.227 |
| $Ln_2O_3$ | 53.278 | 51.286 | 51.385 | 51.385 | 51.385 | 53.385 | 53.385 |
| RO | 0.000 | 0.000 | 5.000 | 5.000 | 5.000 | 0.000 | 0.000 |
| $Rn_2O$ | 0.870 | 1.000 | 1.000 | 1.000 | 1.000 | 0.500 | 1.000 |
| B+Nb | 11.608 | 8.000 | 11.502 | 11.502 | 11.502 | 7.502 | 5.502 |
| $\lambda_{70}$[nm] | 384 | 395 | 382 | 383 | 382 | 391 | 390.5 |
| $\lambda_5$[nm] | 312 | 321 | 310 | 312 | 311 | 318 | 318.5 |
| Refractive index ($n_d$) | 1.696 | 1.745 | 1.707 | 1.701 | 1.703 | 1.702 | 1.705 |
| Abbe number ($v_d$) | 53.0 | 49.1 | 52.5 | 52.7 | 52.7 | 52.6 | 52.1 |
| Acid resistance ($RA_{(P)}$) | 2 | 2 | 2 | 2 | 2 | 2 | 2 |
| Degree of abrasion (Aa) | 51 | 53 | 57 | 56 | 57 | 53 | 49 |

[Table 24]

| (Unit: mass%) | Example | | | | | | |
|---|---|---|---|---|---|---|---|
| | 154 | 155 | 156 | 157 | 158 | 159 | 160 |
| $SiO_2$ | 21.21 | 24.71 | 26.21 | 26.21 | 26.21 | 22.21 | 24.71 |
| $B_2O_3$ | 11.50 | 5.50 | 5.50 | 5.50 | 5.50 | 12.63 | 5.50 |
| $Al_2O_3$ | 9.90 | 15.90 | 13.90 | 13.90 | 13.90 | 11.90 | 15.90 |
| $Y_2O_3$ | 15.80 | 16.80 | 116.80 | 15.80 | 17.80 | 16.80 | 17.30 |
| $La_2O_3$ | 35.59 | 36.59 | 36.59 | 37.59 | 35.59 | 35.59 | 36.09 |
| $Gd_2O_3$ | | | | | | | |
| $TiO_2$ | | | | | | | |
| $ZrO_2$ | | | | | | | |
| $Nb_2O_5$ | | | | | | | |
| $WO_3$ | | | | | | | |
| $ZnO$ | | | | | | | |
| $MgO$ | 5.00 | | | | | | |
| $CaO$ | | | | | | | |
| $SrO$ | | | | | | | |
| $BaO$ | | | | | | | |
| $Li_2O$ | 1.00 | 0.50 | 1.00 | 1.00 | 1.00 | 0.87 | 0.50 |
| $Na_2O$ | | | | | | | |
| $K_2O$ | | | | | | | |
| $P_2O_5$ | | | | | | | |
| $TaO_5$ | | | | | | | |
| $Sb_2O_3$ | | | | | | | |
| $SnO_2$ | | | | | | | |
| Total | 100.000 | 100.000 | 100.000 | 100.000 | 100.000 | 100.001 | 100.000 |
| B/Si | 0.542 | 0.223 | 0.210 | 0.210 | 0.210 | 0.569 | 0.223 |
| $Ln_2O_3$ | 51.385 | 53.385 | 53.385 | 53.385 | 53.385 | 52.385 | 53.385 |
| RO | 5.000 | 0.000 | 0.000 | 0.000 | 0.000 | 0.000 | 0.000 |
| $Rn_2O$ | 1.000 | 0.500 | 1.000 | 1.000 | 1.000 | 0.872 | 0.500 |
| B+Nb | 11.502 | 5.502 | 5.502 | 5.502 | 5.502 | 12.631 | 5.502 |
| $\lambda_{70}$[nm] | 382.5 | 393 | 387.5 | 388 | 387 | 383.5 | 393.5 |
| $\lambda_5$[nm] | 310.5 | 319.5 | 316 | 316.5 | 315.5 | 311.5 | 319 |
| Refractive index ($n_d$) | 1.706 | 1.705 | 1.702 | 1.701 | 1.702 | 1.693 | 1.706 |
| Abbe number ($v_d$) | 52.7 | 52.0 | 52.3 | 52.4 | 52.4 | 53.3 | 52.3 |
| Acid resistance ($RA_{(P)}$) | 2 | 2 | 2 | 2 | 2 | 2 | 2 |
| Degree of abrasion (Aa) | 56 | 48 | 52 | 54 | 53 | 51 | 52 |

[Table 25]

| (Unit: mass%) | Example | | | | | | |
|---|---|---|---|---|---|---|---|
| | 161 | 162 | 163 | 164 | 165 | 166 | 167 |
| $SiO_2$ | 24.71 | 23.21 | 23.21 | 23.00 | 21.00 | 22.21 | 22.21 |
| $B_2O_3$ | 5.50 | 12.63 | 12.63 | 5.00 | 5.00 | 12.63 | 12.63 |
| $Al_2O_3$ | 15.90 | 11.90 | 11.90 | 10.00 | 12.00 | 11.70 | 12.00 |
| $Y_2O_3$ | 16.30 | 16.80 | 16.80 | 16.28 | 16.28 | 16.80 | 16.80 |
| $La_2O_3$ | 37.09 | 34.59 | 34.59 | 35.01 | 35.01 | 35.79 | 35.49 |
| $Gd_2O_3$ | | | | | | | |
| $TiO_2$ | | | | | | | |
| $ZrO_2$ | | | | 4.44 | 4.44 | | |
| $Nb_2O_5$ | | | | | | | |
| $WO_3$ | | | | | | | |
| $ZnO$ | | | | 5.58 | 5.58 | | |
| $MgO$ | | | | | | | |
| $CaO$ | | | | | | | |
| $SrO$ | | | | | | | |
| $BaO$ | | | | | | | |
| $Li_2O$ | 0.50 | 0.87 | 0.87 | 0.50 | 0.50 | 0.87 | 0.87 |
| $Na_2O$ | | | | | | | |
| $K_2O$ | | | | | | | |
| $P_2O_5$ | | | | | | | |
| $TaO_5$ | | | | | | | |
| $Sb_2O_3$ | | | | 0.20 | 0.20 | | |
| $SnO_2$ | | | | | | | |
| Total | 100.000 | 100.001 | 100.001 | 100.000 | 100.000 | 100.001 | 100.001 |
| B/Si | 0.223 | 0.544 | 0.544 | 0.217 | 0.238 | 0.569 | 0.569 |
| $Ln_2O_3$ | 53.385 | 51.385 | 51.385 | 51.286 | 51.286 | 52.585 | 52.285 |
| RO | 0.000 | 0.000 | 0.000 | 0.000 | 0.000 | 0.000 | 0.000 |
| $Rn_2O$ | 0.500 | 0.872 | 0.872 | 0.500 | 0.500 | 0.872 | 0.872 |
| B+Nb | 5.502 | 12.631 | 12.631 | 5.000 | 5.000 | 12.631 | 12.631 |
| $\lambda_{70}$[nml] | 393 | 381 | 382.5 | 391.5. | 396 | 382 | 1383 |
| $\lambda_5$[nm] | 318.5 | 311 | 312 | 315 | 318.5 | 311 | 312 |
| Refractive index ($n_d$) | 1.705 | 1.687 | 1.689 | 1.745 | 1.748 | 1.693 | 1.692 |
| Abbe number ($v_d$) | 51.8 | 53.3 | 53.5 | 49.3 | 49.1 | 53.1 | 53.2 |
| Acid resistance ($RA_{(P)}$) | 2 | 2 | 2 | 2 | 2 | 2 | 2 |
| Degree of abrasion (Aa) | 49 | 53 | 55 | 56 | 54 | 53 | 54 |

[Table 26]

| (Unit: mass%) | Example | | | Comparative Example |
| --- | --- | --- | --- | --- |
| | 168 | 169 | 170 | D |
| $SiO_2$ | 22.50 | 14. 50 | 14.50 | 10.50 |
| $B_2O_3$ | 5.00 | 9.00 | 9.00 | 14.00 |
| $Al_2O_3$ | 10.00 | 11.00 | 11.00 | |
| $Y_2O_3$ | 6.28 | | | |
| $La_2O_3$ | 35.01 | 33.01 | 33.01 | |
| $Gd_2O_3$ | 10.00 | 16.28 | 19.28 | |
| $TiO_2$ | | | | |
| $ZrO_2$ | 4.44 | 4.44 | 4.44 | |
| $Nb_2O_5$ | | 5.00 | | |
| $WO_3$ | | | | |
| $ZnO$ | 5.58 | 5.58 | 5.58 | |
| $MgO$ | | | | 5.00 |
| $CaO$ | | | | 3.50 |
| $SrO$ | | | | 18.00 |
| $BaO$ | | | | 21.00 |
| $Li_2O$ | 1.00 | 1.00 | 1.00 | 1.50 |
| $Na_2O$ | | | 1.00 | |
| $K_2O$ | | | 1.00 | |
| $P_2O_5$ | | | | 33.00 |
| $TaO_5$ | | | | 3.50 |
| $Sb_2O_3$ | 0.20 | 0.20 | 0.20 | |
| $SnO_2$ | | | | |
| Total | 100.000 | 100.000 | 100.000 | 100.000 |
| B/Si | 0.222 | 0.621 | 10.621 | 28.000 |
| $Ln_2O_3$ | 51.286 | 49.286 | 52.286 | 0.000 |
| RO | 0.000 | 0.000 | 0.000 | 47.500 |
| $Rn_2O$ | 1.000 | 1.000 | 3.000 | 1.500 |
| B+Nb | 5.000 | 14.000 | 9.000 | 14.000 |
| $\lambda_{70}$[nm] | 391 | 395 | 517 | 378 |
| $\lambda_5$[nm] | 316 | 321 | 351 | 322 |
| Refractive index ($n_d$) | 1.740 | 1.769 | 1.737 | 1.610 |
| Abbe number ($v_d$) | 49.2 | 45.3 | 48.4 | 62.8 |
| Acid resistance ($RA_{(P)}$) | 2 | 2 | 2 | 5 |
| Degree of abrasion (Aa) | 55 | 62 | 68 | 272 |

As is shown in Tables, the optical glass in each of Examples according to the first aspect of the invention has a mass ratio ($B_2O_3/SiO_2$) of not more than 1.0 and has therefore acid resistance of Class 1 to Class 3. On the other hand, the glass in each of Comparative Examples A and B has poor acid resistance because the mass ratio ($B_2O_3/SiO_2$)

exceeds 1.0.

In the optical glass in each of Examples according to the first aspect of the invention, the refractive index ($n_d$) was not less than 1.78 and more specifically not less than 1.80, and not more than 1.95 and more specifically not more than 1.93, and was thus within the desired range.

In the optical glass in each of Examples according to the first aspect of the invention, the Abbe number ($v_d$) was not more than 45 and more specifically not more than 40, and not less than 25 and more specifically not less than 28, and was thus within the desired range.

In the optical glass in each of Examples according to the first aspect of the invention, $\lambda_{70}$ (wavelength at the transmittance of 70%) was not more than 500 nm and more specifically not more than 480 nm. In the optical glass in each of Examples according to the invention, As (wavelength at the transmittance of 5%) was not more than 400 nm and more specifically not more than 380 nm, and was within the desired range.

As is shown in Tables, the optical glass in each of Examples according to the second aspect of the invention has a mass ratio ($B_2O_3/SiO_2$) of not more than 1.0 and has therefore acid resistance of Class 1 to Class 3. On the other hand, the glass in each of Comparative Examples A and B has poor acid resistance because the mass ratio ($B_2O_3/SiO_2$) exceeds 1.0.

In the optical glass in each of Examples according to the second aspect of the invention, the refractive index ($n_d$) was not less than 1.60 but not more than 1.85, and was thus within the desired range.

In the optical glass in each of Examples according to the second aspect of the invention, the Abbe number ($v_d$) was not more than 62 and more specifically not more than 57, and not less than 33 and more specifically not less than 35, and was thus within the desired range.

In the optical glass in each of Examples according to the second aspect of the invention, the degree of abrasion was not more than 200.

Accordingly, it turned out that the optical glass in each of Examples of the invention has high abrasion resistance and is less likely to have surface flaws when used as a lens.

In the optical glass in each of Examples according to the second aspect of the invention, $\lambda_{80}$ (wavelength at the transmittance of 80%) was not more than 500 nm and more specifically not more than 490 nm. In the optical glass in each of Examples according to the invention, $\lambda_5$ (wavelength at the transmittance of 5%) was not more than 400 nm and more specifically not more than 390 nm, and was within the desired range.

In the optical glass in each of Examples according to the invention, the degree of abrasion was not more than 200.

Accordingly, it turned out that the optical glass in each of Examples of the invention has high abrasion resistance and is less likely to have surface flaws when used as a lens.

Accordingly, in the optical glass in each of Examples according to the invention, the chemical durability (acid resistance) as measured by the powder method was of Class 1 to Class 3 while the refractive index ($n_d$) and the Abbe number ($v_d$) were also within desired ranges. Consequently, it turned out that the optical glass in each of Examples of the invention has excellent chemical durability (acid resistance).

In addition, the optical glass in each of Examples according to the invention was used to form glass blocks, which were then subjected to grinding and polishing to be formed into lens and prism shapes. As a result, the optical glass could be stably formed into various lens and prism shapes.

While the present invention has been described above in detail for illustrative purposes, the examples are only for illustrative purposes, and it should be understood that a person skilled in the art could make many modifications without departing from the spirit and scope of the invention.

**Claims**

1. An optical glass comprising, by mass%:

   10.0% to 40.0% of an $SiO_2$ component;
   15.0% to 50.0% of an $La_2O_3$ component; and
   5.0% to less than 25.0% of a $TiO_2$ component,
   wherein the optical glass has
   a $B_2O_3/SiO_2$ mass ratio of not more than 1.00,
   a refractive index ($n_d$) of 1.78 to 1.95, and an Abbe number ($v_d$) of 25 to 45, and
   chemical durability (acid resistance) of Class 1 to Class 3 when measured by a powder method.

2. The optical glass according to claim 1 comprising, by mass%:

   0 to 30.0% of a ZnO component;

0 to 20.0% of a $ZrO_2$ component;
0 to 20.0% of an $Al_2O_3$ component;
0 to 25.0% of a $Y_2O_3$ component; and
0 to 20.0% of a $B_2O_3$ component.

3. The optical glass according to claim 1 or 2, wherein a total mass of $B_2O_3 + Nb_2O_5$ is less than 20.0%, and a total mass of $ZrO_2 + Nb_2O_5 + WO_3 + ZnO$ is less than 25.0%.

4. The optical glass according to any one of claims 1 to 3, wherein a total mass of $TiO_2 + ZrO_2$ is less than 35.0%.

5. An optical glass comprising, by mass%:

10.0% to 50.0% of an $SiO_2$ component;
15.0% to 60.0% of an $La_2O_3$ component; and
0 to less than 15.0% of a $TiO_2$ component,
wherein the optical glass has
a $B_2O_3/SiO_2$ mass ratio of not more than 1.00,
a refractive index ($n_d$) of 1.60 to 1.85, and an Abbe number ($v_d$) of 33 to 62, and
chemical durability (acid resistance) of Class 1 to Class 3 when measured by a powder method.

6. The optical glass according to claim 5 comprising, by mass%:

0 to 35.0% of a ZnO component;
0 to 20.0% of a $ZrO_2$ component;
0 to 20.0% of an $Al_2O_3$ component; and
0 to 20.0% of a $B_2O_3$ component.

7. The optical glass according to claim 5 or 6, wherein a total mass of $B_2O_3 + Nb_2O_5$ is less than 20.0%.

8. The optical glass according to any one of claims 1 to 7, wherein a total mass of an $Ln_2O_3$ component (where Ln is one or more selected from the group consisting of La, Gd, Y, Yb, and Lu) is not less than 15.0% but not more than 65.0%, a total mass of an RO component (where R is one or more selected from the group consisting of Mg, Ca, Sr, and Ba) is not more than 25.0%, and a total mass of an $Rn_2O$ component (where Rn is one or more selected from the group consisting of Li, Na, and K) is not more than 10.0%.

9. The optical glass according to any one of claims 1 to 8, having a degree of abrasion of not more than 200.

10. A preform material comprising the optical glass according to any one of claims 1 to 9.

11. An optical element comprising the optical glass according to any one of claims 1 to 10.

12. An optical instrument comprising the optical element according to claim 11.

## INTERNATIONAL SEARCH REPORT

<table>
<tr><td colspan="2">International application No.<br>PCT/JP2017/010321</td></tr>
</table>

A. CLASSIFICATION OF SUBJECT MATTER
*C03C3/095*(2006.01)i, *C03C3/062*(2006.01)i, *C03C3/068*(2006.01)i, *C03C3/097* (2006.01)i, *G02B1/00*(2006.01)i

According to International Patent Classification (IPC) or to both national classification and IPC

B. FIELDS SEARCHED

Minimum documentation searched (classification system followed by classification symbols)
C03C1/00-14/00

Documentation searched other than minimum documentation to the extent that such documents are included in the fields searched
Jitsuyo Shinan Koho        1922-1996   Jitsuyo Shinan Toroku Koho   1996-2017
Kokai Jitsuyo Shinan Koho  1971-2017   Toroku Jitsuyo Shinan Koho   1994-2017

Electronic data base consulted during the international search (name of data base and, where practicable, search terms used)
INTERGLAD

C. DOCUMENTS CONSIDERED TO BE RELEVANT

| Category* | Citation of document, with indication, where appropriate, of the relevant passages | Relevant to claim No. |
|---|---|---|
| X<br>A | JP 2006-219365 A  (Ohara Inc.),<br>24 August 2006 (24.08.2006),<br>paragraph [0070]; examples<br>& US 2008/0254965 A1<br>paragraph [0070]; examples<br>& WO 2006/075785 A2      & CN 101107202 A | 1-4,8-12<br>5-7 |
| X<br>A | JP 2004-137145 A  (Nippon Electric Glass Co.,<br>Ltd.),<br>13 May 2004 (13.05.2004),<br>paragraph [0003]; examples<br>(Family: none) | 5-12<br>1-4 |
| A | JP 06-144868 A  (Ohara Inc.),<br>24 May 1994 (24.05.1994),<br>paragraphs [0001] to [0006]<br>(Family: none) | 1-12 |

[X]  Further documents are listed in the continuation of Box C.      [ ]  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>19 May 2017 (19.05.17) | Date of mailing of the international search report<br>30 May 2017 (30.05.17) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

| International application No. |
|---|
| PCT/JP2017/010321 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 59-050048 A  (Ohara Optical Glass Mfg. Co., Ltd.), 22 March 1984 (22.03.1984), claims; examples (Family: none) | 1-12 |

Form PCT/ISA/210 (continuation of second sheet) (January 2015)

**EP 3 441 372 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002173334 A

- JP 2009269771 A